(19) Europäisches Patentamt / European Patent Office / Office européen des brevets

(11) **EP 3 811 705 B1**

(12) **EUROPÄISCHE PATENTSCHRIFT**

(45) Veröffentlichungstag und Bekanntmachung des Hinweises auf die Patenterteilung:
**28.01.2026   Patentblatt 2026/05**

(21) Anmeldenummer: **19732973.3**

(22) Anmeldetag: **19.06.2019**

(51) Internationale Patentklassifikation (IPC):
**H04B 1/7143** *(2011.01)*   **H04B 1/7156** *(2011.01)*
**H04B 1/715** *(2011.01)*   **H04W 72/541** *(2023.01)*
**H04W 72/044** *(2023.01)*   **H04W 74/00** *(2009.01)*

(52) Gemeinsame Patentklassifikation (CPC):
**H04B 1/7143; H04B 1/715; H04B 1/7156;**
**H04W 72/541;** H04B 2001/7154; H04W 72/044;
H04W 74/006

(86) Internationale Anmeldenummer:
**PCT/EP2019/066289**

(87) Internationale Veröffentlichungsnummer:
**WO 2019/243466 (26.12.2019 Gazette 2019/52)**

(54) **ERZEUGUNG VON KANALZUGRIFFSMUSTERN FÜR UNTEREINANDER UNKOORDINIERTE NETZWERKE**

GENERATING CHANNEL ACCESS PATTERNS FOR NETWORKS THAT ARE NOT COORDINATED WITH ONE ANOTHER

GÉNÉRATION DE MODÈLES D'ACCÈS CANAL POUR DES RÉSEAUX NON COORDONNÉS ENTRE EUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **22.06.2018   DE 102018210245**

(43) Veröffentlichungstag der Anmeldung:
**28.04.2021   Patentblatt 2021/17**

(73) Patentinhaber:
• **Fraunhofer-Gesellschaft zur Förderung der angewandten Forschung e.V.**
  **80686 München (DE)**
• **Friedrich-Alexander-Universität Erlangen-Nürnberg**
  **91054 Erlangen (DE)**

(72) Erfinder:
• **OBERNOSTERER, Frank**
  **91058 Erlangen (DE)**
• **MEYER, Raimund**
  **91058 Erlangen (DE)**
• **KILIAN, Gerd**
  **91058 Erlangen (DE)**
• **BERNHARD, Josef**
  **91058 Erlangen (DE)**
• **WECHSLER, Johannes**
  **91058 Erlangen (DE)**
• **KNEIßL, Jakob**
  **91058 Erlangen (DE)**
• **ERETH, Stefan**
  **91058 Erlangen (DE)**
• **ROBERT, Jörg**
  **91058 Erlangen (DE)**

(74) Vertreter: **Schlenker, Julian et al**
**Schoppe, Zimmermann, Stöckeler Zinkler, Schenk & Partner mbB**
**Patentanwälte**
**Radlkoferstraße 2**
**81373 München (DE)**

(56) Entgegenhaltungen:
US-A1- 2009 074 033    US-A1- 2010 034 239
US-A1- 2011 305 232    US-A1- 2015 163 814

**Beschreibung**

Ausführungsbeispiele der vorliegenden Erfindung beziehen sich auf einen Controller für einen Teilnehmer eines Kommunikationssystems, auf eine Basisstation eines Kommunikationssystems, auf einen Endpunkt des Kommunikationssystems sowie auf das Kommunikationssystem, wobei das Kommunikationssystem in einem Frequenzband drahtlos kommuniziert, welches von einer Mehrzahl von Kommunikationssystemen zur Kommunikation genutzt wird. Manche Ausführungsbeispiele beziehen sich auf eine Erzeugung von Kanalzugriffsmustern für untereinander unkoordinierte Netzwerke.

Bei der drahtlosen Kommunikation zwischen Teilnehmern eines Kommunikationssystems in einem Frequenzband, welches von einer Mehrzahl von Kommunikationssystemen zur Kommunikation genutzt wird, ist eine Vermeidung von Interferenzen durch Störsignale anderer Kommunikationssysteme (= Kommunikation zwischen Teilnehmern anderer Kommunikationssysteme) erforderlich.

Allgemeine Methoden der Interferenzvermeidung

Störungen von Teilnehmern innerhalb des eigenen Funknetzwerks (oder Kommunikationssystems) werden oftmals durch eine (z.B. durch eine Basisstation) koordinierte, konfliktfreie Zuteilung von Funkressourcen vermieden. Dies erfolgt z.B. in den Mobilfunkstandards GSM, UMTS und LTE, wo (außerhalb der initialen Netzwerk-Anmeldungsphase) Kollisionen von Funkteilnehmern innerhalb desselben Netzwerks durch sogenanntes "Scheduling" (dt. Ablaufplanung) vollständig vermieden werden können.

Störungen durch Funkteilnehmer außerhalb des eigenen Netzwerks werden oftmals durch geeignete Funknetzplanung reduziert. Hierbei wird jedem Netzwerk ein bestimmter nutzbarer Frequenzbereich (seinerseits eventuell bestehend aus mehreren Frequenzkanälen) aus dem gesamten zur Verfügung stehenden Frequenzband zugewiesen. Örtlich benachbarte Netzwerke verwenden unterschiedliche Frequenzbereiche, wodurch direkte Störungen zwischen Teilnehmern örtlich benachbarter Netzwerke nicht vorkommen. Diese Methode stellt letztlich auch eine Form der Koordination zwischen Netzwerken dar.

Wenn eine solche festgelegte Zuteilung von Frequenzbereichen oder Funkkanälen zu individuellen Netzwerken nicht möglich oder nicht praktikabel ist (wie z.B. oftmals in nicht lizenzierten Frequenzbändern), kann ein Netzwerk aus einem Satz von vorgegebenen Frequenzbereichen einen ungenutzten oder z.B. den am wenigsten genutzten durch eine Lastmessung ermitteln und diesen dann belegen bzw. dorthin wechseln.

Interferenzvermeidung bei Einsatz des TSMA-Verfahrens

Einen weiteren Fall stellt die Übertragung von Nachrichten (Datenpaketen) mittels des sog. Telegram-Splitting-Multiple-Access (TSMA, dt. Telegrammaufteilungs-Verfahren) Verfahrens dar [1]. Hier wird der von einem Netzwerk nutzbare Frequenzbereich in eine vorgegebene Anzahl von Frequenzkanälen unterteilt, wobei ein Datenpaket auf eine Mehrzahl von Teil-Datenpaketen aufgeteilt übertragen wird, welche typischerweise zu unterschiedlichen Zeitpunkten und auf unterschiedlichen Frequenzkanälen gesendet werden. Hierbei spielt das für die Übertragung der Teil-Datenpakete verwendete Sprungmuster (oder Zeit-/Frequenzsprungmuster) eine besondere Rolle, wie z.B. in [2] gezeigt wird. Eine besonders hohe Auslastung von Netzwerken lässt sich erzielen, wenn es möglichst viele verschiedene Sprungmuster gibt, welche untereinander nur möglichst wenige und auch kurze Überlappungssequenzen enthalten. Um Interferenz von mehreren Netzwerken untereinander zu verringern, können die Netzwerke relativ zueinander unterschiedliche Sprungmuster verwenden. Diese Netzwerk-individuellen Sprungmuster müssen allen Teilnehmern in den jeweiligen Netzwerken bekannt sein. Zudem ist anzustreben, dass die Sprungmuster - wie oben beschrieben - nur möglichst kurze Überlappungssequenzen zueinander haben, um systematische Kollisionen zwischen Teil-Datenpaketen von Teilnehmern unterschiedlicher Netzwerke zu vermeiden.

In untereinander koordinierten Netzwerken ist es möglich, jedem Netzwerk ein individuelles Sprungmuster zuzuweisen, welches möglichst wenig Überlappung mit den Sprungmustern anderer Netzwerke in Empfangsreichweite hat. Die Gesamtheit aller verfügbaren Sprungmuster kann als Satz (von Sprungmustern) tabelliert werden, aus welchem die Netzwerk-übergreifende, koordinierende Instanz jedem Netzwerk ein/mehrere individuelle(s) Sprungmuster zuweist. Die Berechnung eines Satzes geeigneter Sprungmuster kann vorab nach geeigneten Optimierungskriterien erfolgen.

Sind Netzwerke untereinander nicht koordiniert und ggf. auch zeitlich und im Frequenzbereich nicht synchronisiert, so kann die obige Methode (tabellierte, vorberechnete Sprungmuster) zwar prinzipiell auch angewandt werden, jedoch besteht das Risiko, dass zwei Netzwerke zufällig dasselbe Sprungmuster verwenden. Um die Wahrscheinlichkeit, dass zwei (sich gegenseitig beeinflussende) Netzwerke das gleiche Sprungmuster verwenden, auf ein sinnvolles Maß zu verringern, müsste eine außerordentlich große Zahl von verfügbaren Sprungmustern existieren, insbesondere in einem Szenario mit vielen Netzwerken.

Die US 2010/0034239 A1 bezieht sich auf ein Verfahren zur schnellen Einsynchronisierung eines drahtlosen Geräts in ein drahtloses Sensornetzwerk, welches ein pseudozufälliges Frequenzsprungmuster verwendet. Hierzu werden in einem sog. "Beacon Slot" sog. "Announcement Packets" übertragen, welche jeweils eine Information über das Frequenzsprungmuster und einen derzeitigen Frequenzsprungindex aufweisen. Als Beispiel für die in einem solchen "Announcement Packet" übertragene Information wird in Absatz ein sog. "Seed Value" eines Zufallszahlengenerators angegeben, basierend auf dem das pseudozufällige Frequenzsprungmuster generiert wird.

Die US 2015/0163814 A1 bezieht auf ein drahtloses Feuerdetektionssystem, bei dem ein zu überwachender Bereich, der mit entsprechenden Sensoren ausgestattet ist, von mehreren sog. Gateways bedient wird. Die Gateways bedienen hierbei jeweils diejenigen Sensoren, die in einem Empfangsbereich des jeweiligen Gateways angeordnet sind. Zur Kommunikation mit den jeweiligen Sensoren nutzten die Gateways das gleiche Sprungmuster, das jedoch mit jeweils mit unterschiedlichen Offsets beaufschlagt ist. Der jeweilige Offset wird hierbei durch einen sog. "Seed Value" vorgegeben.

Die US 2009/0074033 A1 bezieht sich auf die Generierung eines Sprungmusters, welches möglichst wenig Interferenzen zu benachbarten Systemen aufweisen soll. Hierbei kann die Basisstation in einer übertragungsfreien Zeit die Frequenzkanäle abhören und das von dem Kommunikationssystem verwendete Sprungmuster dahingehend anpassen, dass Frequenzkanäle, in denen eine Interferenz detektiert wurde, aus dem Sprungmuster ausgenommen werden. Das so erhaltene neue Sprungmuster wird dem Knoten mittels einer sog. Management-Nachricht kommuniziert.

Die US 2011/305232 A1 bezieht sich auf ein Kommunikationssystem, das es Kommunikationsgeräten ermöglicht, die Datenübertragung zu synchronisieren, damit die Geräte drahtlos und effizient in einem Stern- oder Maschennetz kommunizieren können. Das Kommunikationssystem arbeitet in Gegenwart von Rauschquellen anderer Kommunikationssysteme unter Verwendung eines Spreizspektrum-Frequenzsprung-Übertragungsschemas, um auf der Grundlage eines Netzidentifikationscodes auf effiziente Weise adaptive Frequenzsprungmuster zu erzeugen, die für die Mitglieder des drahtlosen Netzes einzigartig sind. Das Kommunikationssystem verwendet einen prädiktiven Abruf von Daten zur Übertragung von einem Gerät, das die Daten speichert, zu einem anfordernden Gerät.

Der vorliegenden Erfindung liegt somit die Aufgabe zugrunde, ein Konzept zu schaffen, welches die Übertragungssicherheit erhöht, wenn mehrere untereinander unkoordinierte Kommunikationssysteme das gleiche Frequenzband zur drahtlosen Kommunikation verwenden.

Diese Aufgabe wird durch die unabhängigen Patentansprüche gelöst.

Vorteilhafte Weiterbildungen finden sich in den abhängigen Patentansprüchen.

Ausführungsbeispiele schaffen eine Basisstation eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird, wobei die Basisstation ausgebildet ist, um ein Signal [z.B. ein Baken-Signal] zu senden, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung [z.B. von Ressourcen] des Frequenzbands angibt [z.B. eine zeitliche Abfolge von für die Kommunikation des Kommunikationssystems verwendbaren (z.B. über das Frequenzband verteilten) Frequenzressourcen], wobei die Information einen Zustand eines Zahlenfolgengenerators [z.B. eines periodischen Zahlenfolgengenerators oder eines deterministischen Zufallszahlengenerators] zur Erzeugung einer Zahlenfolge beschreibt oder wobei die Information eine Zahl [z.B. ein Zeitschlitzindex und/oder ein Bakenindex] einer Zahlenfolge [z.B. einer periodischen Zeitschlitzindexfolge und/oder periodischen Bakenindexfolge] beschreibt, wobei die Zahlenfolge das Kanalzugriffsmuster bestimmt, wobei die Basisstation ausgebildet ist, um das Kanalzugriffsmuster in Abhängigkeit von einer individuellen Information des Kommunikationssystems zu ermitteln, wobei die Basisstation ausgebildet ist, um in Abhängigkeit von

- dem Zustand des Zahlenfolgengenerators oder einer von dem Zustand des Zahlenfolgengenerators abgeleiteten Zahl der Zahlenfolge, oder der Zahl der Zahlenfolge, und
- einer individuellen Information des Kommunikationssystems

eine Pseudozufallszahl R zu ermitteln, wobei die Pseudozufallszahl R das Kanalzugriffsmuster bestimmt.

Bei Ausführungsbeispielen kann sich das Kanalzugriffsmuster von einem anderen Kanalzugriffsmuster unterscheiden, basierend auf dem zumindest ein anderes Kommunikationssystem der Mehrzahl von anderen Kommunikationssystemen auf das Frequenzband zugreift.

Bei Ausführungsbeispielen kann die Basisstation ausgebildet sein, um unkoordiniert zu den anderen Kommunikationssystemen zu arbeiten.

Bei Ausführungsbeispielen kann die Basisstation ausgebildet sein, um mit einem Teilnehmer des Kommunikationssystems unter Verwendung der durch das Kanalzugriffsmuster bestimmten Ressourcen oder einer Teilmenge davon zu kommunizieren.

Bei Ausführungsbeispielen kann die Basisstation ausgebildet sein, um das Signal mit der Information über das Kanalzugriffsmuster mehrfach [z.B. periodisch] auszusenden, wobei die mit aufeinander folgenden Aussendungen des Signals übertragenen Informationen über das Kanalzugriffsmuster unterschiedliche [z.B. aufeinander folgende oder unmittelbar aufeinander folgende] Zustände des Zahlenfolgengenerators oder unterschiedliche Zahlen der Zahlenfolge beschreiben.

Bei Ausführungsbeispielen kann die mit den Aussendungen des Signals übertragenen Informationen nur eine Teilemenge der Zustände des Zahlenfolgengenerators oder der Zahlen der Zahlenfolge beschreiben [z.B. werden nur jeder n-te Zustand oder jede n-te Index Zahl übertragen, wobei n eine natürliche Zahl größer gleich zwei ist].

Bei Ausführungsbeispielen kann die Information über das Kanalzugriffsmuster der Zustand des Zahlenfolgengenerators oder eine davon abgeleitete Information [z.B. ein Teil des Zustands des Zahlenfolgengenerators (z.B. LSBs des Zustands des Zahlenfolgengenerators)] sein.

Bei Ausführungsbeispielen kann die Information über das Kanalzugriffsmuster die Zahl der Zahlenfolge oder eine davon abgeleitete Information [z.B. ein Teil der Zahl der Zahlenfolge (z.B. LSBs der Zahl der Zahlenfolge)] sein.

Bei Ausführungsbeispielen kann die Basisstation ausgebildet sein, um das Kanalzugriffsmuster in Abhängigkeit von dem Zustand des Zahlenfolgengenerators oder einer von dem Zustand des Zahlenfolgengenerators abgeleiteten Zahl der Zahlenfolge zu ermitteln.

Bei Ausführungsbeispielen können basierend auf dem Zustand des Zahlenfolgengenerators auf den Zustand des Zahlenfolgengenerators [z.B. unmittelbar] folgende Zustände des Zahlenfolgengenerators ermittelbar sein, wobei die Basisstation ausgebildet sein kann, um in Abhängigkeit von den folgenden Zuständen des Zahlenfolgengenerators oder davon abgeleiteten folgenden Zahlen der Zahlenfolge das Kanalzugriffsmuster zu ermitteln.

Bei Ausführungsbeispielen kann die Basisstation ausgebildet sein, um das Kanalzugriffsmuster in Abhängigkeit von einer individuellen Information des Kommunikationssystems [z.B. einer immanenten Information des Kommunikationssystems, wie z.B. einem netzwerkspezifischen Identifikator] zu ermitteln.

Bei Ausführungsbeispielen kann die individuelle Information des Kommunikationssystems eine immanente Information des Kommunikationssystems sein.

Bei Ausführungsbeispielen kann die immanente Information des Kommunikationssystems ein netzwerkspezifischer Identifikator sein.

Bei Ausführungsbeispielen kann der netzwerkspezifische Identifikator eine Identifikation des Kommunikationssystems sein.

Bei Ausführungsbeispielen kann die Basisstation ausgebildet ist, um

- den Zustand des Zahlenfolgengenerators, oder eine von dem Zustand des Zahlenfolgengenerators abgeleitete Zahl der Zahlenfolge, oder die Zahl der Zahlenfolge, und
- die individuelle Information des Kommunikationssystems unter Verwendung einer Abbildungsfunktion auf eine Zeitinformation und eine Frequenzinformation abzubilden,

wobei die Zeitinformation und die Frequenzinformation eine Ressource des Kanalzugriffsmusters beschreiben.

Bei Ausführungsbeispielen kann die Zeitinformation einen Zeitschlitz oder einen Zeitschlitzindex beschreiben.

Bei Ausführungsbeispielen kann die Abbildungsfunktion bei der Abbildung auf die Zeitinformation eine Aktivitätsrate des Kommunikationssystems berücksichtigen, wobei die Aktivitätsrate vor Ausführung festgelegt wird oder wobei das Signal oder ein weiteres von der Basisstation gesendetes Signal eine Information über die Aktivitätsrate aufweist.

Bei Ausführungsbeispielen kann die Abbildungsfunktion bei der Abbildung auf die Zeitinformation unterschiedliche Aktivitätsraten des Kommunikationssystems berücksichtigen, so dass das Kanalzugriffsmuster Bereiche unterschiedlicher Aktivitätsraten aufweist, wobei das Signal oder das weitere Signal eine Information über die Aktivitätsraten aufweist.

Bei Ausführungsbeispielen kann die Basisstation ausgebildet sein, um die Aktivitätsrate dynamisch in Abhängigkeit von einer aktuellen oder prädizierten Lastsituation des Kommunikationssystems anzupassen.

Bei Ausführungsbeispielen kann die Abbildungsfunktion bei der Abbildung auf die Zeitinformation einen vorgegebenen Mindestabstand [z.B. von einem oder mehreren Zeitschlitzen oder Zeitschlitzindexen] zwischen [z.B. unmittelbar] aufeinanderfolgenden Zeitschlitzen oder Zeitschlitzindexen des Kanalzugriffsmusters einhalten.

Bei Ausführungsbeispielen kann die Frequenzinformation einen Frequenzkanal oder einen Frequenzkanalindex beschreiben.

Bei Ausführungsbeispielen kann die Frequenzinformation einen Abstand zwischen [z.B. unmittelbar] aufeinanderfolgenden Frequenzkanälen oder Frequenzkanalindexen des Kanalzugriffsmusters beschreiben.

Bei Ausführungsbeispielen kann die Abbildungsfunktion bei der Abbildung auf die Frequenzinformation einen vorgegebenen Mindestabstand zwischen [z.B. unmittelbar] aufeinanderfolgenden Frequenzkanälen oder Frequenzkanalindexen des Kanalzugriffsmusters einhalten.

Bei Ausführungsbeispielen kann die Abbildungsfunktion bei der Abbildung auf die Frequenzinformation einen störanfälligen Frequenzkanal oder einen Bereich von störanfälligen Frequenzkanälen des Frequenzbands berücksichtigen, sodass der störanfällige Frequenzkanal oder der Bereich von störanfälligen Frequenzkanälen nicht oder weniger von dem Kanalzugriffsmuster belegt wird.

Bei Ausführungsbeispielen kann die Frequenzinformation eine Bündelung von Frequenzressourcen des Frequenzbands beschreiben, die zumindest zwei unmittelbar benachbarte oder voneinander beabstandete Frequenzkanäle oder Frequenzkanalindizes umfasst.

Bei Ausführungsbeispielen kann die Basisstation ausgebildet sein, um basierend auf der Pseudozufallszahl R eine Ressource [z.B. Frequenzkanal und/oder Zeitschlitz, oder Frequenzkanalindex und/oder Zeitschlitzindex] des Kanalzugriffsmusters zu ermitteln.

Bei Ausführungsbeispielen kann das Signal ein Baken-Signal sein.

Bei Ausführungsbeispielen kann der Zahlenfolgengenerator ein periodischer Zahlenfolgengenerator zur Erzeugung einer periodischen Zahlenfolge sein.

Bei Ausführungsbeispielen kann der Zahlenfolgengenerator ein deterministischer Zufallszahlengenerator zur Erzeugung einer pseudozufälligen Zahlenfolge sein.

Bei Ausführungsbeispielen kann der Zustand des Zahlenfolgengenerators ein periodischer Bakenindex und/oder ein periodischer Zeitschlitzindex sein.

Bei Ausführungsbeispielen kann eine von dem Zustand des Zahlenfolgengenerators abgeleitete Zahl ein periodischer Bakenindex und/oder ein periodischer Zeitschlitzindex sein.

Bei Ausführungsbeispielen kann die Zahl der Zahlenfolge ein periodischer Bakenindex und/oder ein periodischer Zeitschlitzindex sein.

Bei Ausführungsbeispielen kann eine durch das Kanalzugriffsmuster definierte Belegung des Frequenzbands eine Belegung des Frequenzbands durch ein anderes Kommunikationssystem zumindest teilweise überlappen.

Weitere Ausführungsbeispiele schaffen einen Endpunkt eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird, wobei der Endpunkt ausgebildet ist, um ein Signal [z.B. ein Baken-Signal] zu empfangen, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung [z.B. von Ressourcen] des Frequenzbands angibt [z.B. eine zeitliche Abfolge von für die Kommunikation des Kommunikationssystems verwendbaren (z.B. über das Frequenzband verteilten) Frequenzressourcen], wobei der Endpunkt ausgebildet ist, um das Kanalzugriffsmuster basierend auf der Information über das Kanalzugriffsmuster zu ermitteln, wobei die Information einen Zustand eines Zahlenfolgengenerators [z.B. eines periodischen Zahlenfolgengenerators oder eines deterministischen Zufallszahlengenerators] zur Erzeugung einer Zahlenfolge beschreibt oder wobei die Information eine Zahl [z.B. ein Zeitschlitzindex und/oder ein Bakenindex] einer Zahlenfolge [z.B. einer periodischen Zeitschlitzindexfolge und/oder periodischen Bakenindexfolge] beschreibt, wobei die Zahlenfolge das Kanalzugriffsmuster bestimmt, wobei der Endpunkt ausgebildet ist, um das Kanalzugriffsmuster in Abhängigkeit von einer individuellen Information des Kommunikationssystems zu ermitteln, wobei der Endpunkt ausgebildet ist, um in Abhängigkeit von

- dem Zustand des Zahlenfolgengenerators oder einer von dem Zustand des Zahlenfolgengenerators abgeleiteten Zahl der Zahlenfolge, oder der Zahl der Zahlenfolge, und
- einer individuellen Information des Kommunikationssystems

eine Pseudozufallszahl R zu ermitteln, wobei die Pseudozufallszahl R das Kanalzugriffsmuster bestimmt.

Bei Ausführungsbeispielen kann sich das Kanalzugriffsmuster von einem anderen Kanalzugriffsmuster, basierend auf dem zumindest ein anderes Kommunikationssystem der Mehrzahl von anderen Kommunikationssystemen auf das Frequenzband zugreift, unterscheiden.

Bei Ausführungsbeispielen kann der Endpunkt ausgebildet sein, um unkoordiniert zu den anderen Kommunikationssystemen zu arbeiten.

Bei Ausführungsbeispielen kann der Endpunkt ausgebildet sein, um mit einem Teilnehmer des Kommunikationssystems unter Verwendung der durch das Kanalzugriffsmuster bestimmten Ressourcen oder einer Teilmenge davon zu kommunizieren.

Bei Ausführungsbeispielen kann der Endpunkt ausgebildet sein, um das Signal mit der Information über das Kanalzugriffsmuster mehrfach [z.B. periodisch oder sporadisch] zu empfangen, wobei die mit aufeinander folgenden Aussendungen des Signals übertragenen Informationen über das Kanalzugriffsmuster unterschiedliche [z.B. aufeinander folgende oder unmittelbar aufeinander folgende] Zustände des Zahlenfolgengenerators oder unterschiedliche Zahlen der Zahlenfolge beschreiben, wobei der Endpunkt ausgebildet sein kann, um das Kanalzugriffsmuster basierend auf den Informationen über das Kanalzugriffsmuster [z.B. basierend auf den unterschiedlichen Zuständen des Zahlenfolgengenerators oder den unterschiedlichen Zahlen der Zahlenfolge] zu ermitteln.

Bei Ausführungsbeispielen können die mit den Aussendungen des Signals übertragenen Informationen nur eine Teilmenge der Zustände des Zahlenfolgengenerators oder der Zahlen der Zahlenfolge beschreiben [z.B. wird nur jeder n-te Zustand oder jede n-te Index Zahl übertragen, wobei n eine natürliche Zahl größer gleich zwei ist].

Bei Ausführungsbeispielen kann die Information über das Kanalzugriffsmuster der Zustand des Zahlenfolgengenerators oder eine davon abgeleitete Information [z.B. ein Teil des Zustands des Zahlenfolgengenerators (z.B. LSBs des Zustands des Zahlenfolgengenerators)] sein.

Bei Ausführungsbeispielen kann die Information über das Kanalzugriffsmuster die Zahl der Zahlenfolge oder eine davon abgeleitete Information [z.B. ein Teil der Zahl der Zahlenfolge (z.B. LSBs der Zahl der Zahlenfolge)] sein.

Bei Ausführungsbeispielen kann der Endpunkt ausgebildet sein, um das Kanalzugriffsmuster in Abhängigkeit von dem Zustand des Zahlenfolgengenerators oder einer von dem Zustand des Zahlenfolgengenerators abgeleiteten Zahl der Zahlenfolge zu ermitteln.

Bei Ausführungsbeispielen können basierend auf dem Zustand des Zahlenfolgengenerators auf den Zustand des Zahlenfolgengenerators [z.B. unmittelbar] folgende Zustände des Zahlenfolgengenerators ermittelbar sein, wobei der Endpunkt ausgebildet sein kann, um in Abhängigkeit von den folgenden Zuständen des Zahlenfolgengenerators oder davon abgeleiteten folgenden Zahlen der Zahlenfolge das Kanalzugriffsmuster zu ermitteln.

Bei Ausführungsbeispielen kann der Endpunkt ausgebildet sein, um das Kanalzugriffsmuster in Abhängigkeit von einer individuellen Information des Kommunikationssystems [z.B. einer immanenten Information des Kommunikationssystems, wie z.B. einem netzwerkspezifischen Identifikator] zu ermitteln.

Bei Ausführungsbeispielen kann die individuelle Information des Kommunikationssystems eine immanente Information des Kommunikationssystems sein.

Bei Ausführungsbeispielen kann die immanente Information des Kommunikationssystems ein netzwerkspezifischer Identifikator sein.

Bei Ausführungsbeispielen kann der netzwerkspezifische Identifikator eine Identifikation des Kommunikationssystems sein.

Bei Ausführungsbeispielen kann der Endpunkt ausgebildet sein, um

- den Zustand des Zahlenfolgengenerators, oder eine von dem Zustand des Zahlenfolgengenerators abgeleitete Zahl der Zahlenfolge, oder die Zahl der Zahlenfolge, und
- die individuelle Information des Kommunikationssystems unter Verwendung einer Abbildungsfunktion auf eine Zeitinformation und eine Frequenzinformation abzubilden,

wobei die Zeitinformation und die Frequenzinformation eine Ressource des Kanalzugriffsmusters beschreiben.

Bei Ausführungsbeispielen kann die Zeitinformation einen Zeitschlitz oder einen Zeitschlitzindex beschreiben.

Bei Ausführungsbeispielen kann die Abbildungsfunktion bei der Abbildung auf die Zeitinformation eine Aktivitätsrate des Kommunikationssystems berücksichtigen, wobei die Aktivitätsrate vor Ausführung festgelegt wird oder wobei das Signal oder ein weiteres empfangenes Signal eine Information über die Aktivitätsrate aufweist.

Bei Ausführungsbeispielen kann die Abbildungsfunktion bei der Abbildung auf die Zeitinformation unterschiedliche Aktivitätsraten des Kommunikationssystems berücksichtigen, so dass das Kanalzugriffsmuster Bereiche unterschiedlicher Aktivitätsraten aufweist, wobei das Signal oder das weitere Signal eine Information über die Aktivitätsraten aufweist.

Bei Ausführungsbeispielen kann das Signal eine Information über die Aktivitätsraten des Kommunikationssystems aufweisen.

Bei Ausführungsbeispiele kann der Endpunkt ausgebildet sein, um ein weiteres Signal zu empfangen, wobei das weitere Signal eine Information über die Aktivitätsraten des Kommunikationssystems aufweist.

Bei Ausführungsbeispielen kann die Abbildungsfunktion bei der Abbildung auf die Zeitinformation einen vorgegebenen Mindestabstand [z.B. von einem oder mehreren Zeitschlitzen oder Zeitschlitzindexen] zwischen [z.B. unmittelbar] aufeinanderfolgenden Zeitschlitzen oder Zeitschlitzindexen des Kanalzugriffsmusters einhalten.

Bei Ausführungsbeispielen kann die Frequenzinformation einen Frequenzkanal oder einen Frequenzkanalindex beschreiben.

Bei Ausführungsbeispielen kann die Frequenzinformation einen Abstand zwischen [z.B. unmittelbar] aufeinanderfolgenden Frequenzkanälen oder Frequenzkanalindexen des Kanalzugriffsmusters beschreiben.

Bei Ausführungsbeispielen kann die Abbildungsfunktion bei der Abbildung auf die Frequenzinformation einen vorgegebenen Mindestabstand zwischen [z.B. unmittelbar] aufeinanderfolgenden Frequenzkanälen oder Frequenzkanalindexen des Kanalzugriffsmusters einhalten.

Bei Ausführungsbeispielen kann die Abbildungsfunktion bei der Abbildung auf die Frequenzinformation einen störanfälligen Frequenzkanal oder einen Bereich von störanfälligen Frequenzkanälen des Frequenzbands berücksichtigen, sodass der störanfällige Frequenzkanal oder der Bereich von störanfälligen Frequenzkanälen nicht oder weniger von dem Kanalzugriffsmuster belegt wird.

Bei Ausführungsbeispielen kann die Frequenzinformation zumindest zwei unmittelbar benachbarte oder voneinander beabstandete Frequenzkanäle oder Frequenzkanalindizes beschreiben.

Bei Ausführungsbeispielen kann der Endpunkt ausgebildet sein, um basierend auf der Pseudozufallszahl R eine Ressource [z.B. Frequenzkanal und/oder Zeitschlitz, oder Frequenzkanalindex und/oder Zeitschlitzindex] des Kanalzugriffsmusters zu ermitteln.

Bei Ausführungsbeispielen kann das Signal ein Baken-Signal sein.

Bei Ausführungsbeispielen kann der Zahlenfolgengenerator ein periodischer Zahlenfolgengenerator zur Erzeugung einer periodischen Zahlenfolge sein.

Bei Ausführungsbeispielen kann der Zahlenfolgengenerator ein deterministischer Zufallszahlengenerator zur Erzeugung einer pseudozufälligen Zahlenfolge sein.

Bei Ausführungsbeispielen kann der Zustand des Zahlenfolgengenerators ein periodischer Bakenindex und/oder ein periodischer Zeitschlitzindex sein.

Bei Ausführungsbeispielen kann eine von dem Zustand des Zahlenfolgengenerators abgeleitete Zahl ein periodischer Bakenindex und/oder ein periodischer Zeitschlitzindex sein.

Bei Ausführungsbeispielen kann die Zahl der Zahlenfolge ein periodischer Bakenindex und/oder ein periodischer Zeitschlitzindex sein.

Bei Ausführungsbeispielen kann eine durch das Kanalzugriffsmuster definierte Belegung des Frequenzbands eine Belegung des Frequenzbands durch ein anderes Kommunikationssystem zumindest teilweise überlappen.

Weitere Ausführungsbeispiele schaffen ein Kommunikationssystem mit einer der oben beschriebenen Basisstationen und zumindest einem der oben beschriebenen Endpunkte.

Weiter Ausführungsbeispiele schaffen ein Verfahren zum Betreiben einer Basisstation eines Kommunikationssystems, wobei das Kommunikationssystem in einem Frequenzband drahtlos kommuniziert, welches von einer Mehrzahl von Kommunikationssystemen zur Kommunikation genutzt wird. Das Verfahren umfasst einen Schritt des Sendens eines Signals, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt, wobei die Information einen Zustand eines Zahlenfolgengenerators zur Erzeugung einer Zahlenfolge beschreibt oder wobei die Information eine Zahl einer Zahlenfolge beschreibt, wobei die Zahlenfolge das Kanalzugriffsmuster bestimmt, wobei das Kanalzugriffsmuster in Abhängigkeit von einer individuellen Information des Kommunikationssystems ermittelt wird. Ferner umfasst das Verfahren einen Schritt des Ermittelns, in Abhängigkeit von

- dem Zustand des Zahlenfolgengenerators oder einer von dem Zustand des Zahlenfolgengenerators abgeleiteten Zahl der Zahlenfolge, oder der Zahl der Zahlenfolge, und
- einer individuellen Information des Kommunikationssystems

einer Pseudozufallszahl R, wobei die Pseudozufallszahl R das Kanalzugriffsmuster bestimmt.

Weiter Ausführungsbeispiele schaffen ein Verfahren zum Betreiben eines Endpunkts eines Kommunikationssystems, wobei das Kommunikationssystem in einem Frequenzband drahtlos kommuniziert, welches von einer Mehrzahl von Kommunikationssystemen zur Kommunikation genutzt wird. Das Verfahren umfasst einen Schritt des Empfangens eines Signals, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt. Ferner umfasst das Verfahren einen Schritt des Ermittelns des Kanalzugriffsmusters basierend auf der Information über das Kanalzugriffsmuster, wobei die Information einen Zustand eines Zahlenfolgengenerators zur Erzeugung einer Zahlenfolge beschreibt oder wobei die Information eine Zahl einer Zahlenfolge beschreibt, wobei die Zahlenfolge das Kanalzugriffsmuster bestimmt, wobei das Kanalzugriffsmuster in Abhängigkeit von einer individuellen Information des Kommunikationssystems ermittelt wird. Ferner umfasst das Verfahren einen Schritt des Ermittelns, in Abhängigkeit von

- dem Zustand des Zahlenfolgengenerators oder einer von dem Zustand des Zahlenfolgengenerators abgeleiteten Zahl der Zahlenfolge, oder der Zahl der Zahlenfolge, und
- einer individuellen Information des Kommunikationssystems

einer Pseudozufallszahl R, wobei die Pseudozufallszahl R das Kanalzugriffsmuster bestimmt.

Weitere Ausführungsbeispiele schaffen einen Controller für einen Teilnehmer eines Kommunikationssystems, wobei das Kommunikationssystem in einem Frequenzband drahtlos kommuniziert, welches von einer Mehrzahl von Kommunikationssystemen zur Kommunikation genutzt wird, wobei der Controller ausgebildet ist, um ein Kanalzugriffsmuster zu ermitteln, wobei das Kanalzugriffsmuster eine für die Kommunikation des Kommunikationssystems verwendbare frequenz- und/oder zeitsprungbasierte Belegung des Frequenzbands angibt, wobei der Controller ausgebildet ist, um das Kanalzugriffsmuster in Abhängigkeit von einem Zustand eines Zahlenfolgengenerators zur Erzeugung einer Zahlenfolge oder einer Zahl einer Zahlenfolge zu ermitteln.

Bei Ausführungsbeispielen kann der Controller ausgebildet sein, um das Kanalzugriffsmuster in Abhängigkeit von dem Zustand des Zahlenfolgengenerators oder einer von dem Zustand des Zahlenfolgengenerators abgeleiteten Zahl der Zahlenfolge zu ermitteln.

Bei Ausführungsbeispielen können basierend auf dem Zustand des Zahlenfolgengenerators auf den Zustand des Zahlenfolgengenerators [z.B. unmittelbar] folgende Zustände des Zahlenfolgengenerators ermittelbar sein, wobei Controller ausgebildet sein kann, um in Abhängigkeit von den folgenden Zuständen des Zahlenfolgengenerators oder davon abgeleiteten folgenden Zahlen der Zahlenfolge das Kanalzugriffsmuster zu ermitteln.

Bei Ausführungsbeispielen kann der Controller ausgebildet sein, um das Kanalzugriffsmuster in Abhängigkeit von einer individuellen Information des Kommunikationssystems [z.B. einer immanenten Information des Kommunikationssystems, wie z.B. einem netzwerkspezifischen Identifikator] zu ermitteln.

Bei Ausführungsbeispielen kann der Controller ausgebildet sein, um

- den Zustand des Zahlenfolgengenerators, oder eine von dem Zustand des Zahlenfolgengenerators abgeleitete Zahl der Zahlenfolge, oder die Zahl der Zahlenfolge, und
- die individuelle Information des Kommunikationssystems

unter Verwendung einer Abbildungsfunktion auf eine Zeitinformation und eine Frequenzinformation abzubilden, wobei die Zeitinformation und die Frequenzinformation eine Ressource des Kanalzugriffsmusters beschreiben.

Bei Ausführungsbeispielen kann der Controller ausgebildet sein um in Abhängigkeit von

- dem Zustand des Zahlenfolgengenerators oder einer von dem Zustand des Zahlenfolgengenerators abgeleiteten Zahl der Zahlenfolge, oder der Zahl der Zahlenfolge, und
- einer individuellen Information des Kommunikationssystems

eine Pseudozufallszahl R zu ermitteln, wobei die Pseudozufallszahl R das Kanalzugriffsmuster bestimmt.

Bei Ausführungsbeispielen kann der Controller ausgebildet sein, um basierend auf der Pseudozufallszahl R eine Ressource [z.B. Frequenzkanal und/oder Zeitschlitz, oder Frequenzkanalindex und/oder Zeitschlitzindex] des Kanalzugriffsmusters zu ermitteln.

Weitere Ausführungsbeispiele schaffen ein Verfahren zum Erzeugen eines Kanalzugriffsmusters. Das Verfahren umfasst einen Schritt des Erzeugens des Kanalzugriffsmusters, wobei das Kanalzugriffsmuster eine für eine Kommunikation eines Kommunikationssystems verwendbare frequenz- und/oder zeitsprungbasierte Belegung des Frequenzbands angibt, wobei das Kommunikationssystem in einem Frequenzband drahtlos kommuniziert, welches von einer Mehrzahl von Kommunikationssystemen zur Kommunikation genutzt wird, wobei das Kanalzugriffsmuster in Abhängigkeit von einem Zustand eines Zahlenfolgengenerators zur Erzeugung einer Zahlenfolge oder einer Zahl einer Zahlenfolge erzeugt wird.

Weitere Ausführungsbeispiele schaffen ein Kommunikationssystem, wobei das Kommunikationssystem ausgebildet ist, um in einem Frequenzband [z.B. einem lizenzfreien und/oder genehmigungsfreien Frequenzband; z.B. ISM Band], welches von einer Mehrzahl von Kommunikationssystemen zur Kommunikation genutzt wird, drahtlos zu kommunizieren, wobei das Kommunikationssystem ausgebildet ist, um basierend auf einem Kanalzugriffsmuster unterschiedliche Frequenzen oder Frequenzkanäle des Frequenzbands [z.B. in die das Frequenzband unterteilt ist] abschnittsweise [z.B. zeitschlitzweise] für die Kommunikation zu nutzen, unabhängig davon ob diese von einem anderen Kommunikationssystem verwendet werden, wobei sich das Kanalzugriffsmuster von einem anderen Kanalzugriffsmuster, basierend auf dem zumindest ein anderes Kommunikationssystem der Mehrzahl von anderen Kommunikationssystemen auf das Frequenzband zugreift, unterscheidet.

Bei Ausführungsbeispielen kann das Kanalzugriffsmuster eine für die Kommunikation des Kommunikationssystems verwendbare frequenz- und/oder zeitsprungbasierte Belegung [z.B. von Ressourcen] des Frequenzbands angeben [z.B. eine zeitliche Abfolge von für die Kommunikation des Kommunikationssystems verwendbare (z.B. über das Frequenzband verteilte) Frequenzressourcen].

Bei Ausführungsbeispielen kann das Kommunikationssystem ausgebildet sein, um unkoordiniert zu den anderen Kommunikationssystemen in dem Frequenzband zu kommunizieren.

Bei Ausführungsbeispielen kann das Kommunikationssystem ausgebildet sein, um das Kanalzugriffsmuster zu ermitteln.

Bei Ausführungsbeispielen kann das Kanalzugriffsmuster von einer individuellen [z.B. immanenten] Information des Kommunikationssystems abhängig sein.

Bei Ausführungsbeispielen können sich das Kanalzugriffsmuster und das andere Kanalzugriffsmuster in weniger als 20 % der darin festgelegten Ressourcen überlappen.

Bei Ausführungsbeispielen können Teilnehmer des Kommunikationssystems Daten untereinander basierend auf dem Kanalzugriffsmuster abschnittsweise in den unterschiedlichen Kanälen des Frequenzbands übertragen.

Bei Ausführungsbeispielen kann eine Empfangsbandbreite von Teilnehmern des Kommunikationssystems schmaler sein als eine Bandbreite des Frequenzbands.

Weitere Ausführungsbeispiele schaffen ein Verfahren zum Betreiben eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird. Das Verfahren umfasst einen Schritt des Übertragens von Daten zwischen Teilnehmern des Kommunikationssystems basierend auf einem Kanalzugriffsmuster abschnittsweise in unterschiedlichen Kanälen des Frequenzbands, unabhängig davon ob diese oder eine Untermenge davon von anderen Kommunikationssystemen verwendet werden, wobei sich das Kanalzugriffsmuster von einem anderen Kanalzugriffsmuster basierend auf dem zumindest ein anderes Kommunikationssystem der Mehrzahl von anderen Kommunikationssystemen auf das Frequenzband zugreift, unterscheidet.

Weitere Ausführungsbeispiele schaffen eine Kommunikationsanordnung mit einem ersten Kommunikationssystem und einem zweiten Kommunikationssystem, wobei das erste Kommunikationssystem und das zweite Kommunikationssystem ausgebildet sind, um in dem gleichen Frequenzband [z.B. einem lizenzfreien und/oder genehmigungsfreien Frequenzband; z.B. ISM Band] [z.B. welches von einer Mehrzahl von Kommunikationssystemen zur Kommunikation genutzt wird] drahtlos zu kommunizieren, wobei das erste Kommunikationssystem ausgebildet ist, um unter Verwendung eines ersten Kanalzugriffsmusters unterschiedliche Kanäle des Frequenzbands [z.B. in die das Frequenzband unterteilt ist] abschnittsweise [z.B. zeitschlitzweise] für die Kommunikation zu nutzen, unabhängig davon ob diese oder eine Untermenge davon von einem anderen Kommunikationssystem verwendet werden, wobei das zweite Kommunikationssystem ausgebildet ist, um unter Verwendung eines zweiten Kanalzugriffsmusters unterschiedliche Kanäle des Frequenzbands [z.B. in die das Frequenzband unterteilt ist] abschnittsweise [z.B. zeitschlitzweise] für die Kommunikation zu nutzen, unabhängig davon ob diese oder eine Untermenge davon von einem anderen Kommunikationssystem verwendet werden, wobei das erste Kanalzugriffsmuster und das zweite Kanalzugriffsmuster unterschiedlich sind.

Bei Ausführungsbeispielen können das erste Kommunikationssystem und das zweite Kommunikationssystem untereinander nicht koordiniert sein.

Bei Ausführungsbeispielen können Teilnehmer des ersten Kommunikationssystems Daten untereinander basierend auf dem ersten Kanalzugriffsmuster abschnittsweise in den unterschiedlichen Kanälen des Frequenzbands übertragen.

Bei Ausführungsbeispielen können Teilnehmer des zweiten Kommunikationssystems Daten untereinander basierend auf dem zweiten Kanalzugriffsmuster abschnittsweise in den unterschiedlichen Kanälen des Frequenzbands übertragen.

Bei Ausführungsbeispielen können das erste Kommunikationssystem und das zweite Kommunikationssystem untereinander nicht kommunizieren.

Weitere Ausführungsbeispiele schaffen ein Verfahren zum Betreiben von zwei Kommunikationssystemen in einem Frequenzband, welches von einer Mehrzahl von Kommunikationssystemen zur drahtlosen Kommunikation genutzt wird. Das Verfahren umfasst einen Schritt des Übertragens von Daten zwischen Teilnehmern des ersten Kommunikationssystems basierend auf einem ersten Kanalzugriffsmuster abschnittsweise in unterschiedlichen Kanälen des Frequenzbands, unabhängig davon ob diese oder eine Untermenge davon von anderen Kommunikationssystemen verwendet werden. Ferner umfasst das Verfahren einen Schritt des Übertragens von Daten zwischen Teilnehmern des zweiten Kommunikationssystems basierend auf einem zweiten Kanalzugriffsmuster abschnittsweise in unterschiedlichen Kanälen des Frequenzbands, unabhängig davon ob diese oder eine Untermenge davon von anderen Kommunikationssystemen verwendet werden, wobei das erste Kanalzugriffsmuster und das zweite Kanalzugriffsmuster unterschiedlich sind.

Ausführungsbeispiele erhöhen die Leistungsfähigkeit eines digitalen Funkübertragungssystems, indem die wechselseitige Störung zwischen Teilnehmern unterschiedlicher und untereinander nicht koordinierter Funknetzwerke reduziert werden. Dieser Effekt wird gemäß Ausführungsbeispielen durch die Generierung und Nutzung von Netzwerkindividuellen Kanalzugriffsmustern erzielt, welche bestimmte (unten beschriebene Eigenschaften) aufweisen. Ein besonders großer Nutzen ergibt sich bei Datenübertragung unter Einsatz des Telegram-Splitting-Multiple-Access Verfahrens.

Die erhöhte Leistungsfähigkeit wirkt sich wahlweise (bei gegebener Last) in Form einer verringerten Paketfehlerrate aus oder (bei gegebener Paketfehlerrate) in Form einer höheren Auslastung der Netzwerke.

Ausführungsbeispiele der vorliegenden Erfindung werden bezugnehmend auf die beiliegenden Figuren näher beschrieben. Es zeigen:

Fig. 1 ein schematisches Blockschaltbild einer Kommunikationsanordnung mit einem ersten Kommunikationssystem, gemäß einem Ausführungsbeispiel der vorliegenden Erfindung,

Fig. 2 ein schematisches Blockschaltbild einer Kommunikationsanordnung von zwei untereinander unkoordinierten Netzwerken mit je einer Basisstation und jeweils vier zugehörigen Endgeräten, gemäß einem Ausführungsbeispiel der vorliegenden Erfindung,

Fig. 3 in einem Diagramm eine Aufteilung des Frequenzbands in Ressourcen sowie eine durch zwei unterschiedliche Kanalzugriffsmuster definierte frequenz- und zeitsprungbasierte Belegung der Ressourcen des Frequenzbands, gemäß einem Ausführungsbeispiel der vorliegenden Erfindung,

Fig. 4 ein schematisches Blockschaltbild eines Kommunikationssystems mit einer Basisstation und einer Mehrzahl von Endpunkten, gemäß einem Ausführungsbeispiel der vorliegenden Erfindung,

Fig. 5 ein schematisches Blockschaltbild eines Controllers zur Erzeugung eines Kanalzugriffsmusters, gemäß einem Ausführungsbeispiel der vorliegenden Erfindung,

Fig. 6 ein schematisches Blockschaltbild eines Controllers zur Erzeugung eines Kanalzugriffsmusters, gemäß einem weiteren Ausführungsbeispiel der vorliegenden Erfindung,

Fig. 7 ein schematisches Blockschaltbild eines Ausschnitts des Controllers, gemäß einem Ausführungsbeispiel der vorliegenden Erfindung,

Fig. 8 in einem Diagramm ein auf einer Monte-Carlo-Simulation beruhendes Histogramm über die Variable $\Delta fi$,

Fig. 9 in einem Diagramm eine durch ein Kanalzugriffsmuster definierte frequenz- und zeitsprungbasierte Belegung der Ressourcen des Frequenzbands sowie eine Projektion des Kanalzugriffsmusters auf eine Zeitachse, gemäß einem Ausführungsbeispiel der vorliegenden Erfindung,

Fig. 10 in einem Diagramm auf eine Zeitachse projizierte Ressourcenelemente eines Kanalzugriffsmusters, die in ungenutzten Zeitschlitzen resultiert, gemäß einem Ausführungsbeispiel der vorliegenden Erfindung,

Fig. 11 in einem Diagramm auf eine Zeitachse projizierte Ressourcenelemente eines Kanalzugriffsmusters mit einer Aktivitätsrate A=1/4, gemäß einem Ausführungsbeispiel der vorliegenden Erfindung,

Fig. 12 in einem Diagramm auf eine Zeitachse projizierte Ressourcenelemente eines Kanalzugriffsmusters mit einer Aktivitätsrate A=1/4 und einem vorgegebenen Mindestabstand zwischen aufeinander folgenden Zeitschlitzen des Kanalzugriffsmusters, gemäß einem Ausführungsbeispiel der vorliegenden Erfindung,

Fig. 13 eine zeitliche Aufteilung eines Kanalzugriffsmusters 110 in Bereiche unterschiedlicher Aktivitätsrate A1, A2 und A3, gemäß einem Ausführungsbeispiel der vorliegenden Erfindung,

Fig. 14 in einem Diagramm eine durch ein Kanalzugriffsmuster definierte frequenz- und zeitsprungbasierte Belegung der Ressourcen des Frequenzbands, wobei das Kanalzugriffsmuster zusätzlich bei Bedarf aktivierbare Ressourcen aufweist, gemäß einem Ausführungsbeispiel der vorliegenden Erfindung,

Fig. 15 in einem Diagramm eine durch ein Kanalzugriffsmuster definierte frequenz- und zeitsprungbasierte Belegung der Ressourcen des Frequenzbands, wobei ein regelmäßig stärker gestörter Frequenzbereich des Frequenzbands nicht durch das Kanalzugriffsmuster belegt wird, gemäß einem Ausführungsbeispiel der vorliegenden Erfindung,

Fig. 16 in einem Diagramm eine durch ein Kanalzugriffsmuster definierte frequenz- und zeitsprungbasierte Belegung der Ressourcen des Frequenzbands, wobei Ressourcen im Frequenzbereich gebündelt werden, gemäß einem Ausführungsbeispiel der vorliegenden Erfindung,

Fig. 17 ein Flussdiagramm eines Verfahren zum Betreiben einer Basisstation eines Kommunikationssystems, das in einem Frequenzband drahtlos kommuniziert, welches von einer Mehrzahl von Kommunikationssystemen zur Kommunikation genutzt wird, gemäß einem Ausführungsbeispiel der vorliegenden Erfindung,

Fig. 18 ein Flussdiagramm eines Verfahren zum Betreiben eines Endpunkts eines Kommunikationssystems, das in einem Frequenzband drahtlos kommuniziert, welches von einer Mehrzahl von Kommunikationssystemen zur Kommunikation genutzt wird, gemäß einem Ausführungsbeispiel der vorliegenden Erfindung,

Fig. 19    ein Flussdiagramm eines Verfahrens zum Erzeugen eines Kanalzugriffsmusters, gemäß einem Ausführungsbeispiel der vorliegenden Erfindung,

Fig. 20    ein Flussdiagramm eines Verfahrens zum Betreiben eines Kommunikationssystems, welches in einem Frequenzband drahtlos kommuniziert, welches von einer Mehrzahl von Kommunikationssystemen zur Kommunikation genutzt wird, und

Fig. 21    ein Flussdiagramm eines Verfahrens zum Betreiben von zwei Kommunikationssystemen in einem Frequenzband, welches von einer Mehrzahl von Kommunikationssystemen zur drahtlosen Kommunikation genutzt wird.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

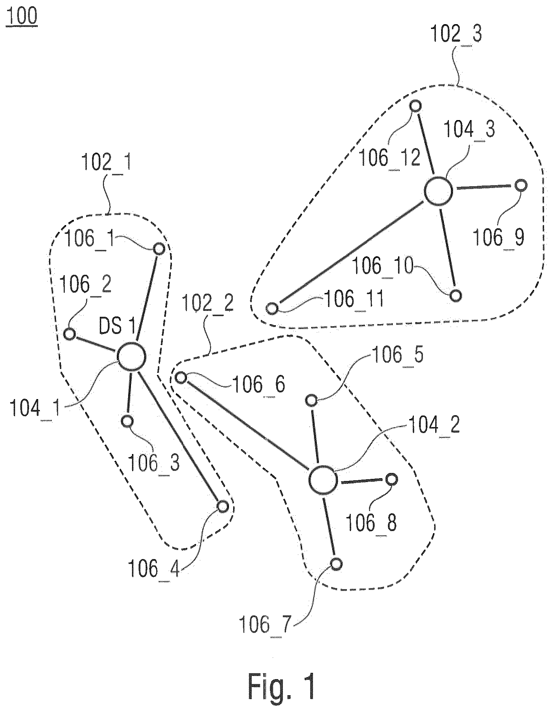

Fig. 1 zeigt ein schematisches Blockschaltbild einer Kommunikationsanordnung 100 mit einem ersten Kommunikationssystem 102_1, gemäß einem Ausführungsbeispiel der vorliegenden Erfindung.

Das erste Kommunikationssystem 102_1 kann eine Basisstation 104_1 und ein oder mehrere Endpunkte 106_1-106_n aufweisen, wobei n eine natürliche Zahl größer gleich eins ist. In dem in Fig. 1 gezeigten Ausführungsbeispiel weist das erste Kommunikationssystem 102_1 zur Veranschaulichung vier Endpunkte 106_1-106_4 auf, das erste Kommunikationssystem 104_1 kann jedoch genauso 1, 10, 100, 1.000, 10.000 oder sogar 100.000 Endpunkte aufweisen.

Das erste Kommunikationssystem 102_1 kann ausgebildet sein, um in einem Frequenzband (z.B. einem lizenzfreien und/oder genehmigungsfreien Frequenzband, z.B. ISM Band), welches von einer Mehrzahl von Kommunikationssystemen zur Kommunikation genutzt wird, drahtlos zu kommunizieren. Das Frequenzband kann dabei eine wesentlich größere (z.B. um zumindest den Faktor zwei größere) Bandbreite aufweisen als Empfangsfilter der Teilnehmer des ersten Kommunikationssystems 102_1.

In Reichweite des ersten Kommunikationssystems 102_1 können - wie dies in Fig. 1 angedeutet ist - beispielsweise ein zweites Kommunikationssystem 102_2 und ein drittes Kommunikationssystem 102_3 sein, wobei diese drei Kommunikationssysteme 102_1, 102_2 und 102_3 das gleiche Frequenzband zur drahtlosen Kommunikation nutzen können.

Bei Ausführungsbeispielen kann das erste Kommunikationssystem 102_1 ausgebildet sein, um basierend auf einem Kanalzugriffsmuster unterschiedliche Frequenzen oder Frequenzkanäle des Frequenzbands (z.B. in die das Frequenzband unterteilt ist) abschnittsweise (z.B. zeitschlitzweise) für die Kommunikation zu nutzen, unabhängig davon ob diese von einem anderen Kommunikationssystem (z.B. dem zweiten Kommunikationssystem 102_2 und/oder dem dritten Kommunikationssystem 102_3) verwendet werden, wobei sich das Kanalzugriffsmuster von einem anderen Kanalzugriffsmuster, basierend auf dem zumindest ein anderes Kommunikationssystem der Mehrzahl von anderen Kommunikationssystemen (z.B. dem zweiten Kommunikationssystem 102_2) auf das Frequenzband zugreift, unterscheidet.

In einer solchen Kommunikationsanordnung 100, wie sie in Fig. 1 gezeigt ist, können die Signale untereinander unkoordinierter Kommunikationssysteme (z.B. das erste Kommunikationssystem 102_1 und das zweite Kommunikationssystem 102_2) somit durch unterschiedliche Kanalzugriffsmuster voneinander getrennt werden, so dass eine wechselseitige Störung durch Interferenzen vermieden oder minimiert wird.

Beispielsweise können Teilnehmer des ersten Kommunikationssystems 102_1, wie z.B. eine Basisstation 104_1 und mehrere Endpunkte 106_1-106_4, basierend auf einem ersten Kanalzugriffsmuster (z.B. welches eine für die Kommunikation des ersten Kommunikationssystems 102_1 verwendbare frequenzsprungbasierte Belegung (z.B. von Ressourcen) des Frequenzbands angibt) drahtlos untereinander kommunizieren, während Teilnehmer des zweiten Kommunikationssystems 102_2, wie z.B. eine Basisstation 104_2 und mehrere Endpunkte 106_5-106_8, basierend auf einem zweiten Kanalzugriffsmuster (z.B. welches eine für die Kommunikation des zweiten Kommunikationssystems 102_2 verwendbare frequenzsprungbasierte Belegung (z.B. von Ressourcen) des Frequenzbands angibt) drahtlos untereinander kommunizieren, wobei das erste Kanalzugriffsmuster und das zweite Kanalzugriffsmuster unterschiedlich sind (z.B. eine Überlappung in den verwendeten Ressourcen von weniger als 20% aufweisen, im Idealfall keine Überlappung aufweisen).

Wie bereits erwähnt, sind die Kommunikationssysteme (z.B. das erste Kommunikationssystem 102_1 und das zweite Kommunikationssystem 102_2) untereinander unkoordiniert.

Dass die Kommunikationssysteme 102_1, 102_2, 102_3 untereinander unkoordiniert sind, bezieht sich hierin darauf, dass die Kommunikationssysteme untereinander (= zwischen den Kommunikationssystemen) keine Information über das jeweils verwendete Kanalzugriffsmuster austauschen, oder mit anderen Worten, dass ein Kommunikationssystem keine Kenntnis über das von einem anderen Kommunikationssystem verwendete Kanalzugriffsmuster hat. Dem ersten Kommunikationssystem 102_1 ist somit nicht bekannt, welches Kanalzugriffsmuster von einem anderen Kommunikationssystem (z.B. dem zweiten Kommunikationssystem 102_2) verwendet wird.

Ausführungsbeispiele beziehen sich somit auf eine Kommunikationsanordnung 100 von untereinander unkoordinierten und ggf. untereinander auch unsynchronisierten Funknetzwerken (oder Kommunikationssystemen) 102_1, 102_2 zur Datenübertragung, die auf ein gemeinsam genutztes Frequenzband zugreifen. Mit anderen Worten, es gibt zumindest zwei Funknetzwerke 102_1, 102_2, welche jeweils unabhängig voneinander arbeiten. Beide Netzwerke 102_1, 102_2 setzen dabei das gleiche Frequenzband ein.

Bei Ausführungsbeispielen wird davon ausgegangen, dass bei jeder einzelnen Datenübertragung jeweils nur ein (kleiner) Teil des Frequenzbandes genutzt wird, wie z.B. ein Frequenzkanal oder ein Teilfrequenzkanal. Beispielsweise kann das Frequenzband in (Teil-)Frequenzkanäle zerlegt werden, wobei ein Frequenzkanal eine echte Teilmenge des gesamten Frequenzbandes ist. Die Gesamtheit aller zur Verfügung stehenden Frequenzkanäle konstituiert dabei das genutzte Frequenzband. Die Übertragung einer Nachricht (Datenpaket) kann z.B. im Telegram-Splitting-Verfahren nacheinander über eine Folge unterschiedlicher Frequenzkanäle erfolgen. In diesem Falle sind Ausführungsbeispiele von besonderem Nutzen.

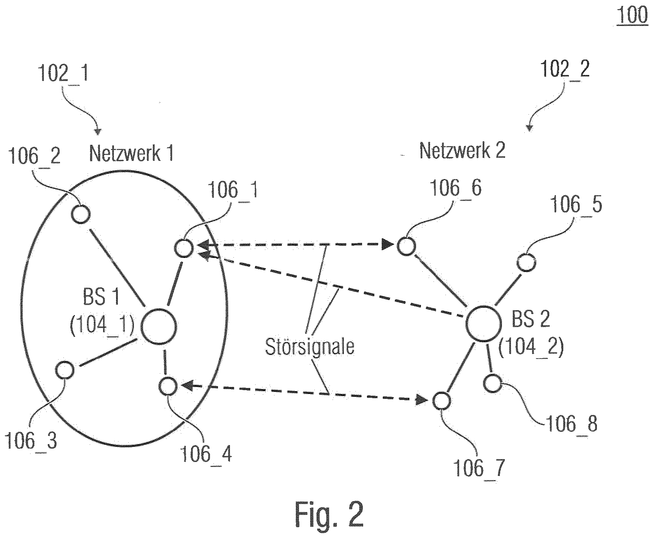

Oftmals sind Netzwerke (oder Kommunikationssysteme) 102_1, 102_2 örtlich so angeordnet, dass Sendesignale von Teilnehmern eines Netzwerks (z.B. des Kommunikationssystems 102_2) auch von Teilnehmern anderer, in der Nähe befindlicher Netzwerke (z.B. des Kommunikationssystems 102_1) empfangbar sind. Mithin treten sie dort als Störsignale (Interferenzen) auf, welche die Leistungsfähigkeit eines Funkübertragungssystems grundsätzlich erheblich beeinträchtigen können, wie dies in Fig. 2 gezeigt ist.

Im Detail zeigt Fig. 2 eine schematische Ansicht von zwei untereinander unkoordinierten Netzwerken 102_1, 102_2 mit je einer Basisstation (BS 1) 104_1, (BS 2) 104_2 und jeweils vier zugehörigen Endgeräten 106_1-106_4, 106_5-106_8. Mit anderen Worten, Fig. 2 zeigt eine beispielhafte Netzwerktopologie für zwei Netzwerke 102_1, 102_2 mit Basisstationen (BS 1) 104_1, (BS 2) 104_2 sowie jeweils vier Endgeräten 106_1-106_4, 106_5-106_8. Die rot gestrichelten Pfeile 108 symbolisieren exemplarisch potentielle Störsignale, d.h. die Funkteilnehmer können die Sendesignale der Teilnehmer aus dem jeweils anderen Netzwerk als Störsignale empfangen. Je nach Gegebenheit kann eine Vielzahl von Netzwerken untereinander in Empfangsreichweite sein, sodass die Teilenehmer (Basisstationen oder Endgeräte) ggf. einer erheblichen Zahl von Störern aus anderen Netzwerken ausgesetzt sein können.

Wird (wie oben erwähnt) das Frequenzband als gemeinsam genutzte Ressource in einzelne, nichtüberlappende Frequenzkanäle unterteilt, so kann die Auswirkung der Störsignale signifikant reduziert werden. In untereinander koordinierten Netzwerken kann jedem Netzwerk ein Teil des Frequenzbands (eine Menge an Frequenzkanälen) exklusiv zugeordnet werden, sodass die wechselseitige Störung (Interferenz) minimiert werden kann. In gänzlich unkoordinierten Netzwerken ist dies nicht möglich.

Bei Ausführungsbeispielen wird daher der Zugriff auf das physikalische Übertragungsmedium (d.h. den physikalischen Funkkanal) in jedem Netzwerk so ausgestaltet, dass zumindest eins aus

   a) der Kanalzugriff, d.h. die Frequenz- und Zeitbelegung des Funkkanals, in einem Netzwerk, möglichst wenig Überlappung in Zeit und Frequenz mit dem Kanalzugriff in anderen Netzwerken desselben Standards hat (hoher Grad an "Orthogonalität"),
   b) der Kanalzugriff innerhalb gewünschter Vorgaben (z.B. mittlere Zugriffshäufigkeit pro Zeit) einen (pseudo-) zufälligen Charakter hat ("Zufälligkeit"),
   c) soweit nach den Vorgaben vermeidbar zwischen Netzwerken keine längeren Sequenzen von (in Zeit und Frequenz) identischem Kanalzugriff auftreten ("Vermeidung systematischer Überlappungen"),
   d) alle Frequenzkanäle innerhalb des Frequenzbandes möglichst gleichmäßig genutzt werden, um eine möglichst hohe Frequenzdiversität sowie ggf. die Einhaltung behördlicher, regulatorischer Vorgaben zu erzielen ("Gleichverteilung der Frequenzkanalnutzung"),
   e) die Information über Frequenz- und Zeitbelegung des Funkkanals z.B. für zu einem Netzwerk neu hinzukommende Teilnehmer mit möglichst geringem Signalisierungsaufwand übermittelt werden kann ("Reduzierung von Signalisierungsinformation"),

erfüllt ist.

Vereinfacht ausgedrückt wird bei Ausführungsbeispielen eine wechselseitige Störung zwischen mehreren Netzwerken (Inter-Netzwerk-Interferenz) dadurch reduziert, dass der Kanalzugriff auf das gemeinsam genutzte Frequenzband in Frequenz und Zeit unterschiedlich, bevorzugt möglichst "orthogonal" und mit (pseudo-)zufälligem Charakter, erfolgt.

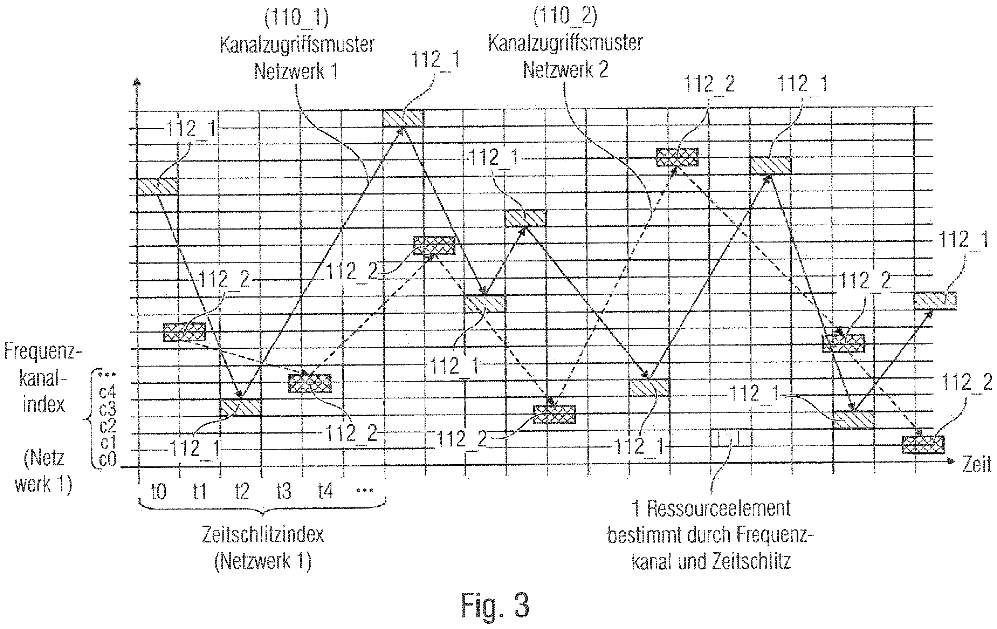

Im Folgenden wird zur Veranschaulichung davon ausgegangen, dass neben der Aufteilung des Frequenzbandes in diskrete Frequenzkanäle (Indizes c0, c1, c2,...) auch eine zeitliche Diskretisierung der Zugriffe innerhalb eines jeden Netzwerks erfolgt. Die zugehörigen zeitlichen Ressourcen werden als Zeitschlitze (engl. Timeslots) bezeichnet und sind in Fig. 3 mit den Indizes t0, t1, t2,... versehen. Beide Anforderungen (Diskretisierung in Frequenz und Zeit) sind jedoch nicht notwendige Voraussetzungen für die Anwendung von Ausführungsbeispielen.

Im Detail zeigt Fig. 3 in einem Diagramm eine Aufteilung des Frequenzbands in Ressourcen sowie eine durch zwei unterschiedliche Kanalzugriffsmuster definierte frequenz- und zeitsprungbasierte Belegung der Ressourcen des Frequenzbands. Dabei beschreibt die Ordinate die Frequenzkanalindizes und die Abszisse die Zeitschlitzindizes.

Beispielsweise können Teilnehmer des ersten Kommunikationssystems 102_1 basierend auf dem ersten Kanalzugriffsmuster 110_1, welches eine für die Kommunikation des ersten Kommunikationssystems 102_1 verwendbare frequenzsprungbasierte Belegung von Ressourcen des Frequenzbands angibt, drahtlos untereinander kommunizieren, während Teilnehmer des zweiten Kommunikationssystems 102_2 basierend auf dem zweiten Kanalzugriffsmuster 110_2, welches eine für die Kommunikation des zweiten Kommunikationssystems 102_2 verwendbare frequenzsprungbasierte Belegung von Ressourcen des Frequenzbands angibt, drahtlos untereinander kommunizieren, wobei das erste Kanalzugriffsmuster und das zweite Kanalzugriffsmuster unterschiedlich sind (z.B. eine Überlappung von weniger als 20% aufweisen, im Idealfall keine Überlappung aufweisen).

Mit anderen Worten, Fig. 3 zeigt in Form eines Gitterrasters eine Übersicht aller grundsätzlich verfügbaren Ressourcen in Frequenz und Zeit (schematische Darstellung der Frequenzkanäle und Zeitschlitze sowie beispielhafte Kanalzugriffsmuster), wobei ein einzelnes Ressourcenelement im ersten Kommunikationsnetzwerk 102_1 durch Zuordnung eines Frequenzkanalindex und eines Zeitschlitzindex bestimmt ist. Beispielhaft sind die durch das erste Kommunikationsnetzwerk 102_1 belegbaren Ressourcen die mit Bezugszeichen 112_1 gekennzeichneten Ressourcenelemente. Die Menge aller innerhalb eines Kommunikationsnetzwerks belegbaren Ressourcen stellt ein Kanalzugriffsmuster 110_1 dar. Für das erste Kommunikationsnetzwerk 102_1 sind dies alle durch Bezugszeichen 112_1 gekennzeichnete Ressourcenelemente, die durch Pfeile verbunden sind. In äquivalenter Weise ist das Kanalzugriffsmuster eines weiteren Kommunikationsnetzwerks (z.B. des zweiten Kommunikationsnetzwerks 102_2) in Fig. 3 beispielhaft eingetragen (alle durch Bezugszeichen 112_2 gekennzeichneten Ressourcenelemente, die durch Pfeile verbunden sind), welches nicht im selben Frequenz- und Zeitraster wie das erste Kommunikationsnetzwerk 102_1 verankert ist (Ressourcenelemente sind in Frequenz und Zeit aus dem Grundraster vom ersten Kommunikationsnetzwerk 102_1 verschoben).

Wichtig ist die Unterscheidung zwischen

- allen grundsätzlich (maximal) verfügbaren Ressourcenelementen, d.h. die Gesamtmenge aller Ressourcenelemente, aus denen das Kanalzugriffsmuster eine geeignete Untermenge auswählt (in Fig. 3 z.B. alle Elemente des Gitternetzes),
- allen in das Kanalzugriffsmuster tatsächlich aufgenommenen Ressourcenelementen (in Fig. 3 alle mit Bezugszeichen 112_1 versehenen Ressourcenelemente) und
- der Menge an Ressourcenelementen (des Kanalzugriffsmusters), die im Netzwerk tatsächlich für eine Datenübertragung belegt werden (es könnte bei geringem Datenaufkommen z.B. nur jedes dritte im Kanalzugriffsmuster vorhandene Ressourcenelement tatsächlich genutzt werden).

Die Gestaltung des Kanalzugriffsmusters bedeutet somit auch eine Festlegung des aktiv nutzbaren Ressourcenvorrats für dieses Kommunikationsnetzwerk (oder Kommunikationssystems).

Im Folgenden werden Ausführungsbeispiele von Basisstationen, Endpunkten und/oder Kommunikationssystemen beschrieben, die zur Kommunikation Kanalzugriffsmuster nutzten, die zumindest eines der oben genannten Kriterien a) bis e) erfüllen. Ferner werden im Folgenden Ausführungsbeispiele der Erzeugung solcher Kanalzugriffsmuster beschrieben.

## 1. Basisstation, Endpunkt und Kommunikationssystem

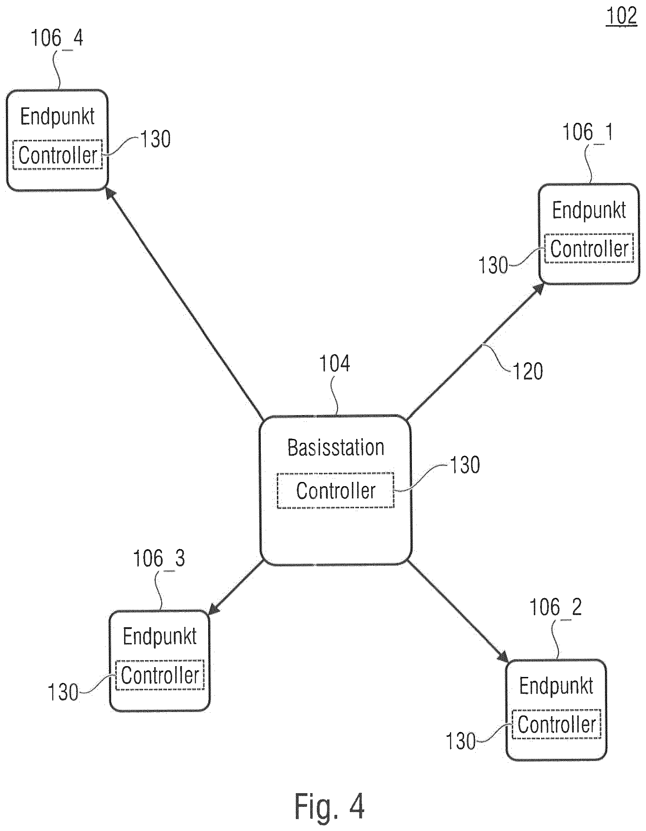

Fig. 4 zeigt ein schematisches Blockschaltbild eines Kommunikationssystems 102 mit einer Basisstation 104 und einer Mehrzahl von Endpunkten 106_1-106_4, gemäß einem Ausführungsbeispiel.

Wie in Fig. 4 gem. einem Ausführungsbeispiel gezeigt ist, kann das Kommunikationssystem 102 eine Basisstation und vier Endpunkte 106_1-106_4 aufweisen. Die vorliegende Erfindung ist jedoch nicht auf solche Ausführungsbeispiele beschränkt, vielmehr kann das Kommunikationssystem ein oder mehrere Endpunkte 106_1-106_n aufweisen, wobei n eine natürliche Zahl größer gleich eins ist. Beispielsweise kann das Kommunikationssystem 1, 10, 100, 1.000, 10.000 oder sogar 100.000 Endpunkte aufweisen.

Die Teilnehmer (= Basisstation 104 und Endpunkte 106_1-106_4) des in Fig. 4 gezeigten Kommunikationssystems nutzen zur gegenseitigen Kommunikation ein Frequenzband (z.B. ein lizenzfreies und/oder genehmigungsfreies Frequenzband, z.B. ISM Band), welches von einer Mehrzahl von Kommunikationssystemen zur Kommunikation genutzt wird, wie dies oben in Bezug auf die Fig. 1 bis 3 erläutert wird. Das Kommunikationssystem 102 arbeitet dabei unkoordiniert in Bezug auf die anderen Kommunikationssysteme, die das gleiche Frequenzband nutzen.

Bei Ausführungsbeispielen kann die Basisstation 104 ausgebildet sein, um ein Signal 120 zu senden, wobei das Signal 120 eine Information über ein Kanalzugriffsmuster 110 aufweist, wobei das Kanalzugriffsmuster eine für die Kommunikation des Kommunikationssystems 102 verwendbare frequenz- und/oder zeitsprungbasierte Belegung (z.B. von Ressourcen) des Frequenzbands angibt (z.B. eine zeitliche Abfolge von für die Kommunikation des Kommunikationssystems verwendbaren (z.B. über das Frequenzband verteilten) Frequenzressourcen), wobei die Information einen Zustand eines Zahlenfolgengenerators zur Erzeugung einer Zahlenfolge beschreibt, wobei die Zahlenfolge das Kanalzugriffsmuster bestimmt.

Beispielsweise kann der Zustand des Zahlenfolgengenerators ein innerer Zustand des Zahlenfolgengenerators sein, wobei von dem inneren Zustand des Zahlenfolgengenerators eine Zahl der Zahlenfolge abgeleitet werden kann. Basierend auf dem inneren Zustand des Zahlenfolgengenerators können auch auf den inneren Zustand des Zahlenfolgengenerators folgende innere Zustände des Zahlenfolgengenerators ermittelt werden, von denen auch folgende Zahlen der Zahlenfolge abgeleitet werden können. Beispielsweise kann die Zahl der Zahlenfolge direkt von dem inneren Zustand des Zahlenfolgengenerators abgeleitet werden (z.B. Zustand = Zahl), z.B. bei der Implementierung des Zahlenfolgengenerators als Zähler, oder aber über eine Abbildungsfunktion, z.B. bei der Implementierung des Zahlenfolgengenerators als Schieberegister, ggf. mit Rückkoppelung.

Bei Ausführungsbeispielen kann zumindest einer der Endpunkte 106_1-106_4 ausgebildet sein, um das Signal 120 mit der Information über das Kanalzugriffsmuster 110 zu empfangen, und um das Kanalzugriffsmuster 110 basierend auf der Information über das Kanalzugriffsmuster zu ermitteln, wobei die Information einen Zustand eines Zahlenfolgengenerators zur Erzeugung einer Zahlenfolge beschreibt, wobei die Zahlenfolge das Kanalzugriffsmuster bestimmt.

Beispielsweise kann die Basisstation 104 und/oder zumindest einer der Endpunkte 106_1-106_4 ausgebildet sein, um das Kanalzugriffsmuster in Abhängigkeit von dem Zustand des Zahlenfolgengenerators pseudozufällig zu ermitteln, wie z.B. unter Verwendung einer pseudozufälligen Abbildungsfunktion.

Ferner kann die Basisstation 104 und/oder zumindest einer der Endpunkte 106_1-106_4 ausgebildet sein, um das Kanalzugriffsmuster in Abhängigkeit von einer individuellen Information des Kommunikationssystems (z.B. einer immanenten Information des Kommunikationssystems, wie z.B. einem netzwerkspezifischen Identifikator) pseudozufällig zu ermitteln.

Im Folgenden werden Ausführungsbeispiele der Erzeugung von Kanalzugriffsmustern beschrieben. Die Kanalzugriffsmuster werden hierbei durch die Basisstation 104 erzeugt und können basierend auf dem Signal mit der Information 120 über das Kanalzugriffsmuster von zumindest einem (oder allen) der in Fig. 4 gezeigten Endpunkte 106_1-106_4 ermittelt werden, beispielsweise durch jeweils einen Controller (Steuergerät, Steuereinheit) 130, der in die Basisstation 104 und/oder in die Endpunkte 106_1-106_4 implementiert ist. Die Vorgabe der Kanalzugriffsmuster erfolgt hierbei (ausschließlich) durch die Basisstation 104, während die Endpunkte 106_1-106_4 das Kanalzugriffsmuster nur "kennen", also nach derselben Methode generieren wie die Basisstation 104.

Dabei wird in der folgenden Beschreibung von einem Funkübertragungssystem (oder einer Kommunikationsanordnung) mit mehreren unabhängigen, untereinander unkoordinierten Kommunikationsnetzwerken ausgegangen, deren Teilnehmer wechselseitig in Empfangsreichweite sind, sodass Sendesignale von Teilnehmern eines Netzwerks potentiell als Störsignale für Teilnehmer anderer Netzwerke in Betracht kommen. Für die Anwendung von Ausführungsbeispielen ist es nicht nötig, dass Information (Daten oder Signalisierungsinformation) zwischen unterschiedlichen Netzwerken ausgetauscht wird.

Ebenso ist es unerheblich, ob die Netzwerke untereinander zeitlich und/oder in der Frequenz synchronisiert sind.

Ferner wird vorausgesetzt, dass es innerhalb jedes Netzwerks eine koordinierende Instanz gibt (im Folgenden "Basisstation" genannt), welche den nicht-koordinierenden Teilnehmern des Netzwerks (im Folgenden "Endgeräte" oder "Endpunkte" genannt) Information über das innerhalb des Netzwerks angewandte Kanalzugriffsmuster übermitteln kann. Diese Information kann z.B. über regelmäßig ausgesendete Baken-Signale (engl. Beacon) übertragen werden, jedoch auch in unregelmäßigen Abständen übertragen werden oder ggf. dediziert an einzelne Endgeräte oder Gruppen von Endgeräten.

Des Weiteren wird davon ausgegangen, dass das gesamte, zur Übertragung zur Verfügung stehende Frequenzband in eine Vielzahl von einzelnen Frequenzkanälen unterteilt ist, auf die jeweils einzeln oder in Teilmengen (Gruppen von Frequenzkanälen) zugegriffen werden kann.

Ohne Einschränkung der Allgemeinheit und zur besseren Veranschaulichung wird in den folgenden Ausführungen davon ausgegangen, dass innerhalb jedes Netzwerks ein festes, diskretes Zeitraster existiert, zu welchem Kanalzugriffe erfolgen können (siehe auch Fig. 3). Ein Kanalzugriff in Form von Aussendung eines Signals kann sowohl durch Endgeräte als auch durch die Basisstation erfolgen. Ein Kanalzugriff muss jedoch in einer im Kanalzugriffsmuster dafür vorgesehenen Ressource nicht notwendigerweise erfolgen, falls z.B. keine Daten oder sonstigen Informationen zur Übertragung anstehen.

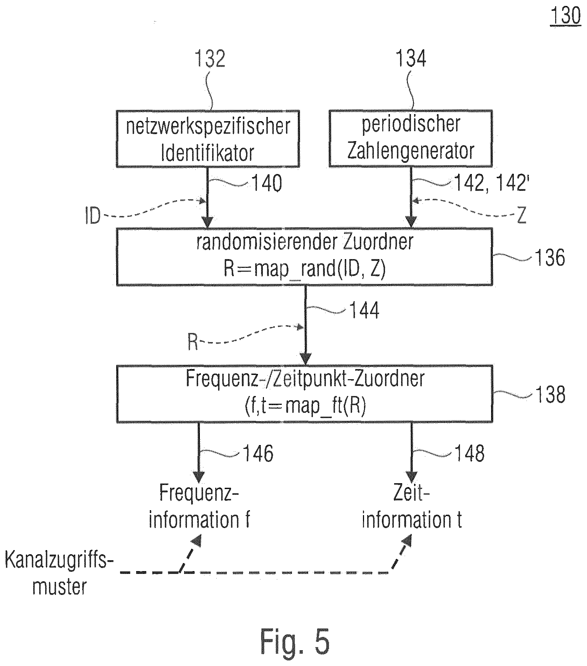

Fig. 5 zeigt ein schematisches Blockschaltbild eines Controllers 130 zur Erzeugung eines Kanalzugriffsmusters, gemäß einem Ausführungsbeispiel der vorliegenden Erfindung.

Wie in Fig. 5 zu erkennen ist, kann der Controller 130 einen Speicher 132, einen periodischen Zahlenfolgengenerator 134 zur Erzeugung einer periodischen Zahlenfolge Z, einen randomisierenden Zuordner 136 und einen Frequenz-/Zeitpunkt-Zuordner 138 aufweisen.

Der Speicher (z.B. ein Register) 132 kann ausgebildet sein, um einen netzwerkspezifischen Identifikator ID 140, z.B. eine (individuelle) Bitsequenz, die sich nicht ändert, vorzuhalten. Der periodische Zahlenfolgengenerator 134 kann ausgebildet sein, um seinen Zustand 142 oder eine von seinem Zustand abgeleitete Zahl 142' der periodischen Zahlenfolge bereitzustellen. Der randomisierende Zuordner 136 kann ausgebildet sein, um in Abhängigkeit von dem Zustand 142 des Zahlenfolgengenerators 134 oder der davon ableiten Zahl 142' der periodischen Zahlenfolge und des netzwerkspezifischen Identifikators ID 140 eine Pseudozufallszahl R 144 zu ermitteln. Der Frequenz-/Zeitpunkt-Zuordner 138 kann ausgebildet sein, um basierend auf der Pseudozufallszahl R 144 eine Frequenzinformation f 146 und eine Zeitinformation t 148 zu ermitteln. Beispielsweise können die Frequenzinformation f 146 und die Zeitinformation t 148 einen Frequenzkanal und einen Zeitschlitz (oder einen Frequenzkanalindex und einen Zeitschlitzindex) und somit eine Ressource des Kanalzugriffsmusters beschreiben bzw. definieren.

Der Controller 130 kann beispielsweise - wie dies in Fig. 4 angedeutet ist - in der Basisstation 104 und/oder in dem einen oder den mehreren Endpunkt(en) 106_1-106-4 implementiert sein, um das von dem Kommunikationssystem 102 verwendete individuelle (oder Netzwerkindividuelle) Kanalzugriffsmuster zu berechnen.

Mit anderen Worten, Fig. 5 zeigt die Grundstruktur zur Erzeugung von Kanalzugriffsmustern, gemäß einem Ausführungsbeispiel der vorliegenden Erfindung.

Die Erzeugung der Kanalzugriffsmuster erfolgt iterativ, d.h. die in Fig. 5 dargestellten Blöcke werden einmal pro Erzeugung einer einzelnen Kanalzugriffsinformation aufgerufen. Durch N-maligen Aufruf wird somit ein Kanalzugriffsmuster mit N Kanalzugriffen generiert.

Die Funktion der Teilblöcke wird im Folgenden im Detail erläutert. Es wird der Begriff "Zahl" verwendet. Dabei handelt es sich allgemein um diskrete Information, welche in unterschiedlicher Darstellung (z.B. in dezimaler Form, als binäre Sequenz o.Ä.) vorliegen kann.

Netzwerkspezifischer Identifikator "ID"

Beim netzwerkspezifischen Identifikator handelt es sich um eine feste Zahl, die von einer äußeren Instanz (z.B. bei Konfiguration des Netzwerks bzw. der koordinierenden Basisstation) festgelegt wird. Idealerweise ist sie von Netzwerk zu Netzwerk unterschiedlich. Beispielsweise könnte es sich um eine eindeutige, hinreichend lange Basisstations-ID, eindeutige Netzwerk-ID oder jeweils einen hinreichend langen Hash darüber handeln. Diese Größe ist fest und variiert als einzige in der gezeigten Anordnung nicht von Aufruf zu Aufruf.

Periodischer Zahlengenerator "Z"

Der periodische Zahlengenerator 134 generiert eine sich periodisch mit der Periodizität P wiederholende Folge von Zahlen Z. Er besitzt einen inneren Zustand $S_n$, aus dem sich die nächste erzeugte Zahl und der nächste innere Zustand $S_{n+1}$ eindeutig bestimmen lassen. Das entscheidende Merkmal ist, dass sich bereits aus einem einzigen inneren Zustand (welcher zu einem beliebigen Zeitschritt vorliegt) die gesamte periodische Folge für jeden beliebigen Zeitschritt ableiten lässt. Ein einfaches Ausführungsbeispiel ist z.B. ein Modulo-P-Zähler, der periodisch die Zahlenfolge 0,1,2... (P-1) liefert. Ein weiteres Ausführungsbeispiel ist ein deterministischer Zufallszahlengenerator (engl. pseudo random number generator), z.B. implementiert in Form eine rückgekoppelten Schieberegisters (LFSR). Ein drittes Ausführungsbeispiel ist ein endlicher Körper (engl. Galois field) mit P Elementen.

Randomisierender Zuordner

Der randomisierende Zuordner 136 generiert aus den beiden Eingangszahlen ID und Z eine Ausgangszahl R, d.h. R=*map_rand*(ID, Z), wobei *map_rand* die Zuordnungsfunktion darstellt. Die Zuordnung hat dabei möglichst zufälligen Charakter, d.h. eine mathematisch korrelierte Eingangssequenz (bestehend aus ID, Z) erzeugt eine möglichst in sich unkorrelierte Ausgangssequenz R.

Ausführungsbeispiele für eine randomisierende Zuordnung sind

- Verkettung der beiden Eingangszahlen
- die Anwendung einer zyklischen Redundanzprüfung (engl. cyclic redundancy check, kurz CRC) auf die Eingangsgrößen ID, Z, welche zur Zahl R führt und randomisierenden Charakter hat,
- die Anwendung einer Hash-Funktion
- die Anwendung einer Verschlüsselung, z.B. AES-Verschlüsselung, wobei der zugehörige Schlüssel dabei allen autorisierten Teilnehmern bekannt ist und was somit auch ein Verfahren zur Einbringung von "transport layer security" (kurz TLS) darstellt.

Die Folge der Elemente der Zahl R ist nach obigen Maßgaben pseudozufälliger Natur. Sie sollte von Netzwerk zu Netzwerk unterschiedlich sein, um Überlappungen der Kanalzugriffsmuster möglichst zu vermeiden.

Frequenz-/Zeitpunkt-Zuordner

Der Frequenz-/Zeitpunkt-Zuordner 138 ordnet jeder Eingangszahl R mittels einer Abbildung ein 2-Tupel von Frequenzinformation (Funkfrequenz f) und Zeitinformation (Zugriffszeitpunkt t) zu, d.h. (f,t)=*map_ft*(R), wobei *"map_ft"* die Zuordnungsfunktion darstellt. Während die Abfolge der Frequenzen grundsätzlich beliebig innerhalb des vorgegebenen Frequenzbands sein kann, müssen die Zeitpunkte dabei von Aufruf zu Aufruf in monoton ansteigender Form vorliegen, da "Rücksprünge" in der Zeit nicht zulässig sind.

Von besonderer Bedeutung ist als Ausführungsbeispiel der Fall, dass der Kanalzugriff in Frequenz- und Zeitrichtung (wie weiter oben beschrieben) diskretisiert ist, d.h. in Form von diskreten Frequenzkanälen und diskreten Zeitschlitzen erfolgt. In diesem Fall ordnet der Frequenz-/Zeitpunkt-Zuordner jeder Eingangszahl R ein 2-Tupel von Frequenzkanalindex fi und Zeitschlitzindex ti zu, d.h. (fi,ti)=*map_ft*(R). Die Zeitschlitze werden dabei in zeitlich aufsteigender Reihenfolge indiziert, da "Rücksprünge" in der Zeit nicht zulässig sind. Weitere Ausführungen zur Belegung der Zeitschlitze finden sich in Abschnitt 3.

Die Abfolge der 2-Tupel (f,t) bzw. (fi, ti) basiert auf der Folge der Elemente von R und definiert das Kanalzugriffsmuster.

Die genaue Gestaltung des Frequenz-/Zeitpunkt-Zuordners bestimmt gemeinsam mit der Wahrscheinlichkeitsfunktion der Zahl R die Zugriffsstatistik auf den Kanal.

Zustandssignalisierung und Prädizierbarkeit

Die in Fig. 5 gezeigte Anordnung generiert ein Kanalzugriffsmuster, welches sowohl von einem zeitlich unveränderlichen, netzwerkspezifischen Identifikator als auch von einem zustandsabhängigen (und damit zeitlich veränderlichen) periodischen Zahlengenerator (Periodizität P) abhängt. Über den netzwerkspezifischen Identifikator kann sichergestellt werden, dass Netzwerke mit unterschiedlichen netzwerkspezifischen Identifikatoren stets unterschiedliche Sequenzen von R generieren, selbst wenn ihr Zahlengenerator sich im gleichen Zustand befinden sollte. Damit kann sichergestellt werden, dass unterschiedliche Netzwerke keine identischen Kanalzugriffsmuster erzeugen und somit im ungünstigsten Fall in eine "Dauerkollision" der Kanalzugriffe geraten.

Ein Endgerät benötigt zur Ermittlung des im Netzwerk angewandten Kanalzugriffsmusters sowohl den netzwerkspezifischen Identifikator als auch den jeweiligen Zustand des periodischen Zahlengenerators.

Den *netzwerkspezifischen Identifikator* erhält das Endgerät bereits bei der Erstanmeldung beim Netzwerk. Dieser wird vorteilhafterweise mittels regelmäßig von der Basisstation ausgesandter Baken-Signale (beacon) übermittelt und allen autorisierten Endgeräten zugänglich gemacht. Alternativ kann der netzwerkspezifische Identifikator dem Endgerät auch im Zuge der Erstkonfiguration (mit Auslieferung) bekannt gemacht werden, somit also vor der ersten Inbetriebnahme im Netzwerk.

Der Zustand des *periodischen Zahlengenerators* kann entweder in einem regelmäßigen Baken-Signal und/oder in eigenen, dedizierten Zustands-Signalisierungs-Ressourcen übermittelt werden. Ein Zahlengenerator mit Periodizität P hat P interne Zustände, sodass zur Übermittlung des jeweiligen Zustands $\lceil \log_2(P) \rceil$ Bits übertragen werden müssen. Die pro Zustandssignalisierung übertragene Informationsmenge (Anzahl der Bits) kann somit durch die gewählte Periodizität des Zahlengenerators nach Anforderung gesteuert werden.

Die für die Zustandssignalisierung übertragene Information kann in Form mehrerer Teilinformationen übertragen werden, wobei die Übertragung in unterschiedlicher Häufigkeit erfolgen kann. So könnten als Ausführungsbeispiel für den Fall, dass es sich bei dem periodischen Zahlengenerator (Z) um einen Zähler handelt, die höherwertigen Bits (engl. most significant bits (MSBs)) des Zählers getrennt von den niederwertigen Bits (engl. least significant bits (LSBs)) übertragen werden und auch mit einer anderen Häufigkeit (z.B. seltener). Auch wenn es sich nicht um einen Zähler handelt, könnte die gesamte Zustandsinformation in Form mehrerer Teil-Zustandsinformationen mit unterschiedlicher Übertragungshäufigkeit übertragen werden.

Durch die Periodizität des Zahlengenerators kann ein Endgerät, welchem der Zustand des Zahlengenerators zu mindestens einem Zeitpunkt bekannt ist, das gesamte Kanalzugriffsmuster für beliebige Zeitpunkte/Zeitschlitze in der Zukunft bestimmen. Damit ist es dem Endgerät möglich, in einem energiesparenden Ruhezustand z.B. die Sende-/Empfangseinheit zu deaktivieren und bei der nachfolgenden Aktivierung der Sende-/Empfangseinheit den dann gültigen Abschnitt des Kanalzugriffsmusters aus dem letzten zuvor bekannten Zustand zu prädizieren. Eine Aussendung der Zustandsinformation durch die Basisstation kann somit in vergleichsweise großen zeitlichen Abständen erfolgen.

Zusammenfassend hat das hierin beschriebene Verfahren den Vorteil, dass durch die Kombination eines netzwerkspezifischen Identifikators und eines periodischen Zahlengenerators ein vergleichsweise großer Zustandsraum für die (Pseudozufalls-)Zahl R aufgespannt wird. Damit wird verhindert, dass die Kanalzugriffsmuster von Netzwerken mit unterschiedlichen netzwerkspezifischen Identifikatoren identisch sind, womit eine systematische Kollision der Kanalzugriffe verschiedener, untereinander unkoordinierter Netzwerk minimiert werden kann. Dies erweist sich beim Telegram-Splitting-Multiple-Access (TSMA) Verfahren als besonders vorteilhaft.

Vorteilhafte Merkmale des Frequenz-Zeit-Zuordners werden in den folgenden Abschnitten detaillierter ausgeführt.

_Weiteres Ausführungsbeispiel des Controllers_

Gemäß Fig. 5 und obiger Beschreibung wird ein periodischer Zahlengenerator 134 benötigt. Dieser wird im folgenden Ausführungsbeispiel wie folgt ersetzt.

Reale Funknetzwerke werden oftmals mit einem Baken-Signal betrieben, welches regelmäßig ausgesendet wird. Jede Baken-Aussendung kann dabei mit einem Zähler versehen werden, welcher einem Baken-Sequenzindex entspricht. Dieser Baken-Sequenzindex wird hier als "Bakenindex" bezeichnet.

Ebenso ist es gebräuchlich, dass in einem zeitschlitzbasierten System die Zeitschlitze mit einem (in Zeitrichtung aufsteigenden) Zeitschlitzindex-Zähler versehen werden (siehe auch Fig. 3). Dieser wird hier als "Zeitschlitzindex" bezeichnet. Der Bakenindex wird in gewissen, im System vorgegebenen Abständen wieder auf null zurückgesetzt, sodass er eine Periodizität aufweist. Entsprechendes gilt für den Zeitschlitzindex (der z.B. nach einer Baken-Aussendung wieder bei null beginnt).

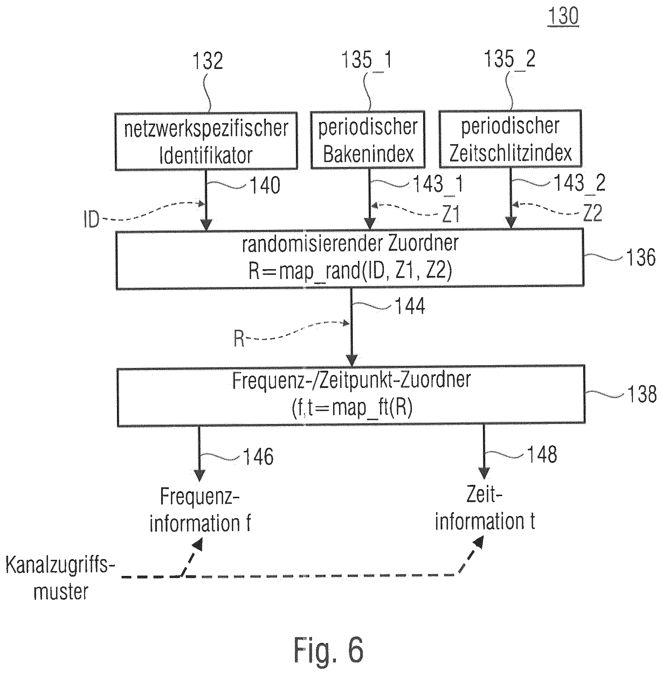

Fig. 6 zeigt ein schematisches Blockschaltbild eines Controllers 130 zur Erzeugung eines Kanalzugriffsmusters, gemäß einem Ausführungsbeispiel der vorliegenden Erfindung.

Der Controller 130 kann einen Speicher 132, einen ersten Zwischenspeicher 135_1, einen zweiten Zwischenspeicher 135_2, einen randomisierenden Zuordner 136 und einen Frequenz-/Zeitpunkt-Zuordner 138 aufweisen.

Der Speicher (z.B. ein Register) 132 kann ausgebildet sein, um einen netzwerkspezifischen Identifikator ID 140, z.B. eine (individuelle) Bitsequenz, die sich nicht ändert, vorzuhalten. Der erste Zwischenspeicher (z.B. ein Register) 135_1 kann ausgebildet sein, um einen periodischen Bakenindex Z1 143_1 vorzuhalten. Der zweite Zwischenspeicher (z.B. ein Register) 135_2 kann ausgebildet sein, um einen periodischen Zeitschlitzindex Z2 143_2 vorzuhalten. Der randomisierende Zuordner 136 kann ausgebildet sein, um in Abhängigkeit von dem periodischen Bakenindex Z1 143_1, dem periodischen Zeitschlitzindex Z2 143_2 und dem netzwerkspezifischen Identifikator ID 140 eine Pseudozufallszahl R 144 zu ermitteln. Der Frequenz-/Zeitpunkt-Zuordner 138 kann ausgebildet sein, um basierend auf der Pseudozufallszahl R 144 eine Frequenzinformation f 146 und eine Zeitinformation t 148 zu ermitteln. Beispielsweise können die Frequenzinformation f 146 und die Zeitinformation t 148 einen Frequenzkanal und einen Zeitschlitz (oder einen Frequenzkanalindex und einen Zeitschlitzindex) und somit eine Ressource des Kanalzugriffsmusters beschreiben bzw. definieren.

Mit anderen Worten, Fig. 6 zeigt eine modifizierte Grundstruktur zur Erzeugung von Kanalzugriffsmustern mit Bakenindex und Zeitschlitzindex. In Fig. 6 ist ein Ausführungsbeispiel dargestellt, in welchem gegenüber dem in Fig. 5 gezeigtem Ausführungsbeispiel der periodische Zahlengenerator (Ausgang Z) 134 durch die beiden Blöcke "periodischer Bakenindex" (Ausgang Z1) 135_1 und "periodischer Zeitschlitzindex" (Ausgang Z2) 135_2 ersetzt wurde. Alle weiteren Blöcke sind funktional unverändert (der Randomisierende Zuordner hat nun drei Eingänge).

Die in Fig. 5 und 6 gezeigten Controller 130 ermöglichen die Erzeugung von Netzwerk-individuellen Kanalzugriffsmustern, wobei diese zumindest eine aus folgenden Eigenschaften aufweisen:

- Die Kanalzugriffsmuster enthalten untereinander möglichst wenig überlappende Teilsequenzen,
- es gibt (z.B. in Bereichen mit hoher Netzwerkdichte) einen großen Vorrat von Kanalzugriffsmustern,
- die Kanalzugriffsmuster sind so gestaltet, dass sie eine sehr hohe Periodizität aufweisen,
- die Kanalzugriffsmuster führen (bei Vorliegen entsprechender Anforderungen) zu einer im Mittel gleichmäßigen Nutzung der zur Verfügung stehenden Frequenzkanäle,
- die Signalisierung des angewandten Musters erfolgt durch die koordinierende Instanz mit möglichst wenig Signalisierungsinformation, und
- Endgeräte können, bereits bei einmaligem, vollständigem Erhalt der Signalisierung des Kanalzugriffsmusters den Inhalt des Kanalzugriffsmusters zu beliebigen, zukünftigen Zeitpunkten bestimmen (dies ermöglicht Endgeräten, z.B. aus Energiespargründen längere Empfangspausen einzulegen und bei Wiedereinschalten dennoch das dann jeweils gültige Kanalzugriffsmuster auf der Basis von vor der Empfangspause erhaltener Information zu ermitteln).

**2. Steuerung der Kanalzugriffe im Frequenzbereich**

Zur Vereinfachung der folgenden Darstellung wird angenommen, dass der Frequenzbereich (oder das Frequenzband) in diskrete Frequenzkanäle unterteilt ist und dass eine Übertragung nach dem TSMA-Verfahren erfolgt.

Mobilfunkkanäle weisen i.d.R. eine über der Frequenz variierende Signaldämpfung auf. Wird gemäß dem TSMA-Verfahren ein Datenpaket in Form mehrerer Teil-Datenpakete übertragen und ist der zugrundeliegende Mobilfunkkanal im Sender nicht bekannt, so kann die Fehlerrate der Übertragung im Mittel reduziert oder sogar minimiert werden, indem die einzelnen Teil-Datenpakete möglichst über den gesamten Frequenzbereich verteilt übertragen werden (Ausnutzung der Frequenzdiversität).

Aus diesem Grund kann es (insbesondere wenn ein Datenpaket aus nur wenigen Teil-Datenpaketen besteht) vorteilhaft sein, wenn gewährleistet ist, dass die Frequenzkanäle auf denen die Teil-Datenpakete übertragen werden, relativ zueinander einen gewissen (Mindest-)Abstand im Frequenzbereich haben.

Da das Kanalzugriffsmuster innerhalb eines Netzwerks in maßgeblicher Weise das Frequenzsprungverhalten bei TSMA bestimmt, kann mit einem geeigneten Verfahren sichergestellt werden, dass zwischen zwei aufeinanderfolgenden Frequenzkanälen des Kanalzugriffsmusters ein Mindestabstand besteht.

Bei Ausführungsbeispielen kann der Frequenz-/Zeitpunkt-Zuordner 138 (siehe Fig. 5 oder 6) daher ausgebildet sein, um basierend auf der Pseudozufallszahl R eine Frequenzinformation f und eine Zeitinformation t zu ermitteln, wobei die Frequenzinformation f einen Abstand zwischen zwei aufeinanderfolgenden Frequenzkanälen angibt.

Der Frequenz-/Zeitpunkt-Zuordner 138 in Fig. 5 oder 6, der auf Basis der pseudozufälligen Zahl R absolute Frequenzkanäle von Zugriff zu Zugriff unabhängig festlegt, kann also alternativ auch Abstände zwischen zwei aufeinanderfolgenden Frequenzkanälen bestimmen.

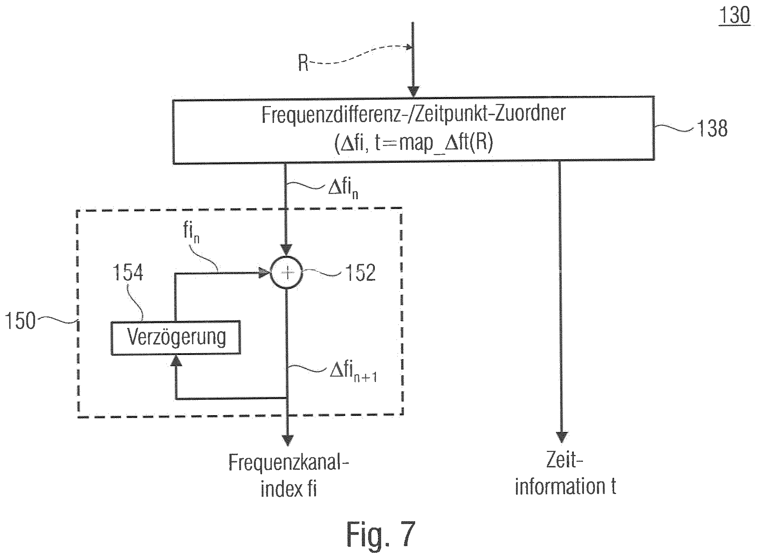

Fig. 7 zeigt ein schematisches Blockschaltbild eines Ausschnitts des Controllers 130, gemäß einem Ausführungsbeispiel. Wie in Fig. 7 zu erkennen ist, kann der Frequenz-/Zeitpunkt-Zuordner 138 (siehe Fig. 5 oder 6) ausgebildet sein, um basierend auf der Pseudozufallszahl R eine Frequenzinformation und eine Zeitinformation zu ermitteln, wobei die Frequenzinformation einen Abstand $\Delta fi_n$ zwischen zwei aufeinanderfolgenden Frequenzkanälen angibt.

Wie in Fig. 7 ferner zu erkennen ist, kann der Controller 130 einen Abbilder 150 aufweisen, der ausgebildet sein kann, um den Abstand $\Delta fi_n$ zwischen zwei aufeinanderfolgenden Frequenzkanälen auf einen Frequenzkanalindex fi abzubilden, beispielsweise durch einen Kombinierer (z.B. Addierer) 152 und ein Verzögerungsglied 154.

Mit anderen Worten, Fig. 7 zeigt die Erzeugung von Frequenzsprüngen mit Mindest- und oder Höchstsprungweite. In Fig. 7 ist dabei veranschaulicht, dass der Frequenz-/Zeitpunkt-Zuordner 138 von Fig. 5 oder 6 nunmehr durch einen Frequenzdifferenz-/Zeitpunkt-Zuordner 138 ersetzt ist, welcher an seinem unmittelbaren Ausgang keine absoluten Frequenzkanalindizes mehr liefert, sondern Frequenzkanalindex-Differenzen.

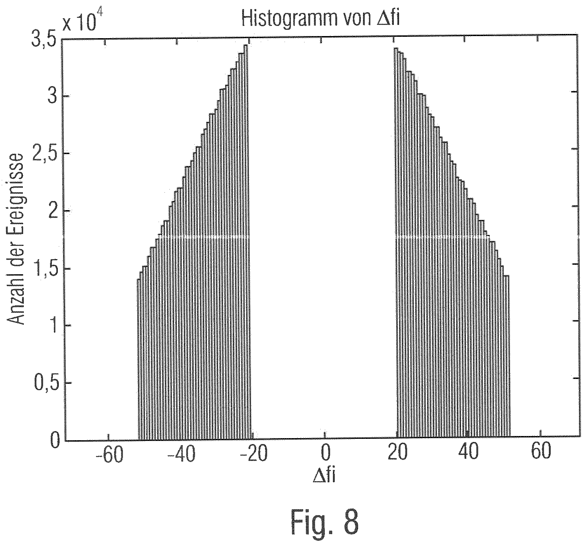

Durch eine geeignete Zuordnungsfunktion $(\Delta fi,t)=map\_\Delta ft(R)$ im Frequenzdifferenz-/Zeitpunkt-Zuordner kann sichergestellt werden, dass nur Frequenzkanalindexsprünge $\Delta fi_n=fi_{n+1}-fi_n$ (von Kanalzugriff n zu Kanalzugriff n+1) erfolgen, welche z.B. innerhalb eines gewünschten Bereichs liegen, z.B. $\Delta fi_{max} \geq \Delta fi \geq \Delta fi_{min}$ für $\Delta fi>0$ und $\Delta fi_{max} \geq (-\Delta fi) \geq \Delta fi_{min}$ für $\Delta fi<0$. Für die Implementierung einer solchen Beschränkung gibt es zahlreiche Verfahren, welche selbst nicht Gegenstand der Erfindung sind. Eine beispielhafte Implementierung in Form eines entsprechenden Programmcodes für MATLAB (mit welchem Fig. 8 erzeugt wurde) findet sich im Anhang.

Fig. 8 zeigt in einem Diagramm ein auf einer Monte-Carlo-Simulation beruhendes Histogramm über die Variable $\Delta fi$ (Differenz des Frequenzkanalindex $\Delta fi$ zwischen zeitl. benachbarten Kanalzugriffen).

Im dargestellten Beispiel stehen 72 Frequenzkanäle zur Verfügung. Die den Simulationsergebnissen zugehörigen Parameter sind $\Delta fi_{min}=21$, $\Delta fi_{max}=51$, d.h. der Betrag des Abstands zwischen zwei im Kanalzugriffsmuster aufeinanderfolgenden Zugriffen beträgt zwischen 21 und 51 Frequenzkanälen.

Durch geeignete, sich dem Fachmann leicht erschließende Modifikationen des beispielhaften Programmcodes lassen sich andere Verteilungsformen für $\Delta fi$ erzeugen (z.B. Gleichverteilung im Bereich von $-\Delta fi_{min}$ bis $-\Delta fi_{max}$ bzw. $+\Delta fi_{min}$ bis $+\Delta fi_{max}$) als in Fig. 8 gezeigt.

3. Vorgabe der zeitlichen Kanalzugriffsaktivität

In einem hoch ausgelasteten System können alle verfügbaren Zeitschlitze in das Kanalzugriffsmuster mit aufgenommen werden. In weniger stark ausgelasteten Systemen muss nicht jeder Zeitschlitz für den Kanalzugriff zur Verfügung stehen. Dies ist in der folgenden Abbildung dargestellt.

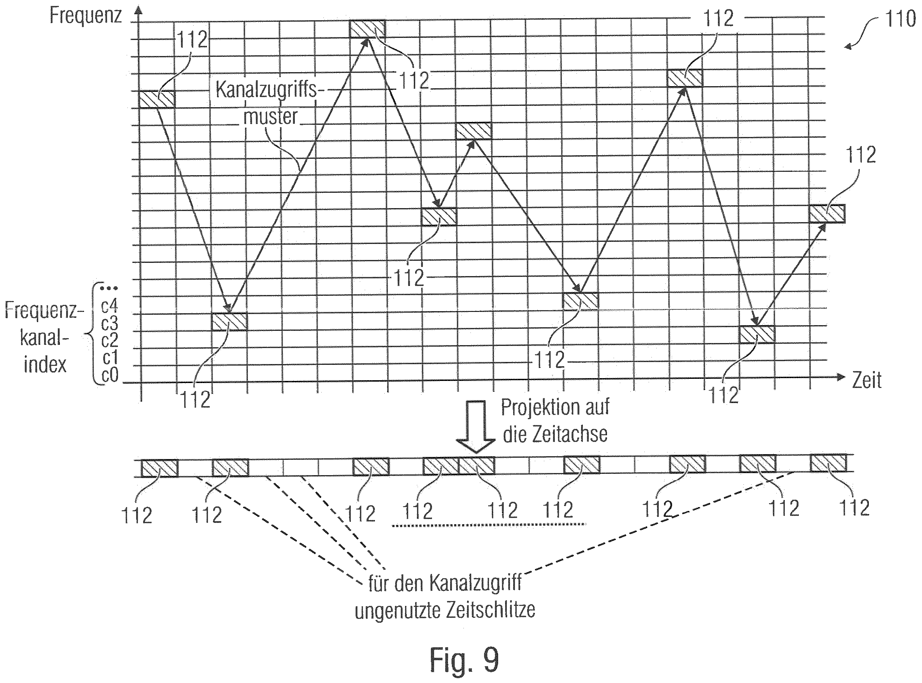

Fig. 9 zeigt in einem Diagramm eine durch ein Kanalzugriffsmuster 110 definierte frequenz- und zeitsprungbasierte Belegung der Ressourcen 112 des Frequenzbands sowie eine Projektion des Kanalzugriffsmusters 110 auf eine Zeitachse, gemäß einem Ausführungsbeispiel der vorliegenden Erfindung. Dabei beschreibt die Ordinate die Frequenzkanalindizes und die Abszisse die Zeitschlitzindizes.

Mit anderen Worten, Fig. 9 zeigt im oberen Teil beispielhaft ein Kanalzugriffsmuster 110 in den Dimensionen Frequenz und Zeit (Ressourcenelemente 112) sowie im unteren Teil dessen Projektion auf die Zeitdimension. Es ist zu erkennen, dass nicht jeder Zeitschlitz Teil des Kanalzugriffsmusters 110 ist.

Damit steht für die Erzeugung eines pseudozufälligen Kanalzugriffsmusters 110 neben der Dimension Frequenz (in Form des Frequenzkanalindex) zusätzlich die Dimension Zeit (in Form des Zeitschlitzindex) zur Verfügung. Bei der Erzeugung eines Kanalzugriffsmusters kann somit eine mittlere Aktivitätsrate A vorgegeben werden. Diese sei hier definiert als mittleres Verhältnis von für den Kanalzugriff genutzten Zeitschlitzen zu insgesamt maximal verfügbaren Zeitschlitzen. Bei Nutzung jedes Zeitschlitzes beträgt die Aktivitätsrate A somit 1 (100%). Wird hingegen im Mittel nur jeder dritte Zeitschlitz ins Kanalzugriffsmuster aufgenommen, so beträgt die mittlere Aktivitätsrate A=1/3.

Die Aktivitätsrate bestimmt also die (zeitliche) Dichte der im Kanalzugriffsmuster 110 angebotenen Ressourcen 112.

Bei Ausführungsbeispielen können die zu einer vorgegebenen Aktivitätsrate für den Kanalzugriff ausgewählten Zeitschlitze pseudozufällig aus einem geeigneten Teil der Pseudozufallszahl R (siehe Fig. 5 oder 6) bestimmt werden.

Ausführungsbeispiel 1

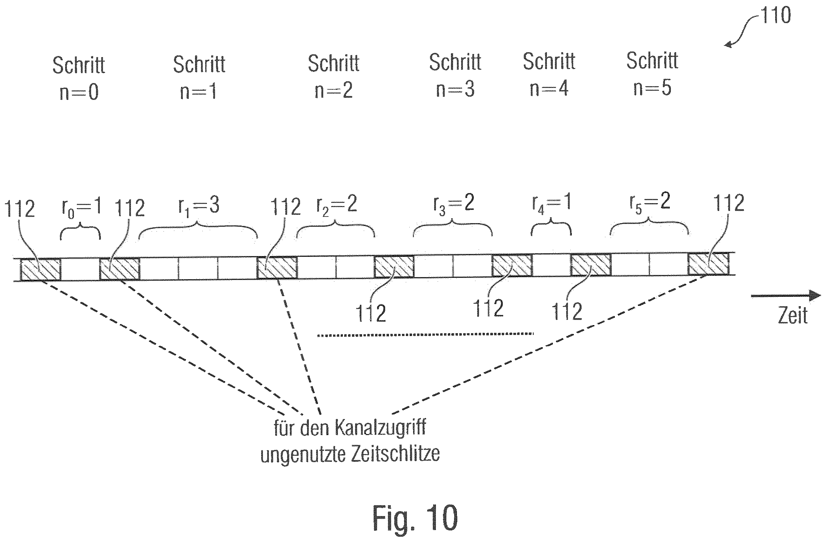

In jedem Schritt n kann aus der zugehörigen Pseudozufallszahl $R_n$ eine ganze Zahl $r_n$ abgeleitet werden, die Werte zwischen $r_{min}$ und $r_{max}$ annehmen kann, d.h. $r_{min} \leq r_n \leq r_{max}$. Nach jedem im Kanalzugriffsmuster 110 aktiven Zeitschlitz kann eine Anzahl von $r_n$ Zeitschlitzen übersprungen werden, diese werden somit nicht für den Kanalzugriff verwendet. Dieser Vorgang ist exemplarisch in Fig. 10 dargestellt.

Im Detail zeigt Fig. 10 in einem Diagramm auf eine Zeitachse projizierte Ressourcenelemente 112 eines Kanalzugriffsmusters 110, die in ungenutzten Zeitschlitzen resultiert, gemäß einem Ausführungsbeispiel.

Mit anderen Worten, Fig. 10 zeigt eine beispielhafte Abfolge von genutzten und ungenutzten Zeitschlitzen, gemäß einem Ausführungsbeispiel.

Wird die Zahl r aus der Zahl R dergestalt abgeleitet, dass die Elemente von r zwischen $r_{min}$ und $r_{max}$ mit gleicher Häufigkeit auftreten (Gleichverteilung), so ergibt sich folgende Aktivitätsrate:

$$A=2/(2+r_{min}+r_{max}).$$

Das im obigen Ausführungsbeispiel vorgestellte Verfahren hat den Vorteil, dass Mindest- und Höchstabstände zwischen den im Kanalzugriffsmuster 110 aktiven Zeitschlitzen vorgegeben werden können. Die Vorgabe von Mindestabständen kann insbesondere bei batteriebetriebenen Geräten vorteilhaft sein, bei denen Sendepausen einer gewissen Mindestlänge zwischen zwei aufeinanderfolgenden Aussendungen (Erholungsphase) die Batterielebensdauer erhöhen.

In vergleichbarer Vorgehensweise lässt sich vorgeben, dass eine Mindestzahl von aktiven Zeitschlitzen direkt aufeinander folgt.

Ausführungsbeispiel 2

Bei einer Implementierung gemäß Ausführungsbeispiel 1 können theoretisch längere Bereiche mit lokal deutlich höherer oder niedrigerer Aktivitätsrate als gewünscht vorkommen. Dieser Effekt wird in dem folgenden Ausführungsbeispiel vermieden.

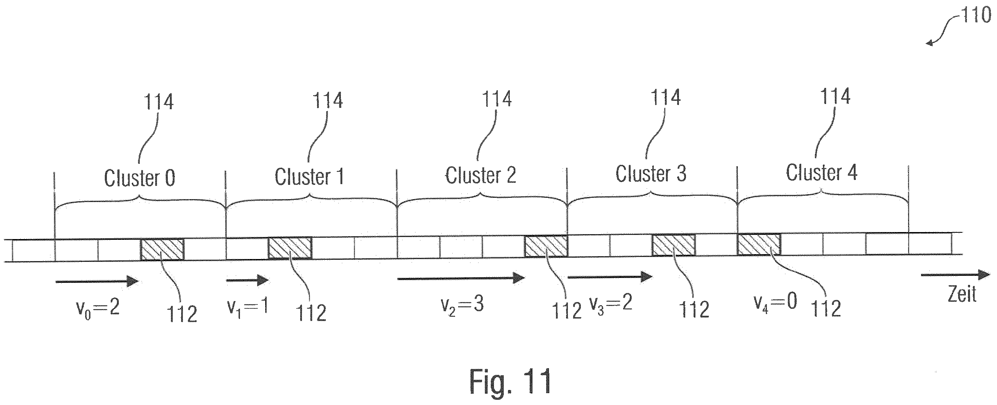

Hierbei werden periodisch Gruppen von aufeinanderfolgenden Zeitschlitzen vorgegeben, innerhalb welcher jeweils ein aktiver Zeitschlitz des Kanalzugriffsmusters platziert wird. Dies ist für eine Aktivitätsrate von 1/4 (25%) in Fig. 11 exemplarisch dargestellt.

Im Detail zeigt Fig. 11 in einem Diagramm auf eine Zeitachse projizierte Ressourcenelemente 112 eines Kanalzugriffsmusters 110 mit einer Aktivitätsrate A=1/4, gemäß einem Ausführungsbeispiel.

Mit anderen Worten, Fig. 11 zeigt eine beispielhafte Abfolge von genutzten und ungenutzten Zeitschlitzen, gemäß einem Ausführungsbeispiel.

Wie in Fig. 11 zu erkennen ist, können die Zeitschlitze zu Clustern 114 (im Beispiel von Fig. 11 der Länge 4) gruppiert werden. In jedem Cluster 114 wird genau ein Zeitschlitz des Kanalzugriffsmusters 110 platziert. Die Position der ins Kanalzugriffsmuster 110 aufgenommenen Zeitschlitze innerhalb des Clusters 114 kann durch eine Verschiebung $v_n$ bestimmt werden, welche von der Pseudozufallszahl $R_n$ abgeleitet und die ganzzahlige Werte zwischen 0 und (Clusterlänge-1) annehmen kann.

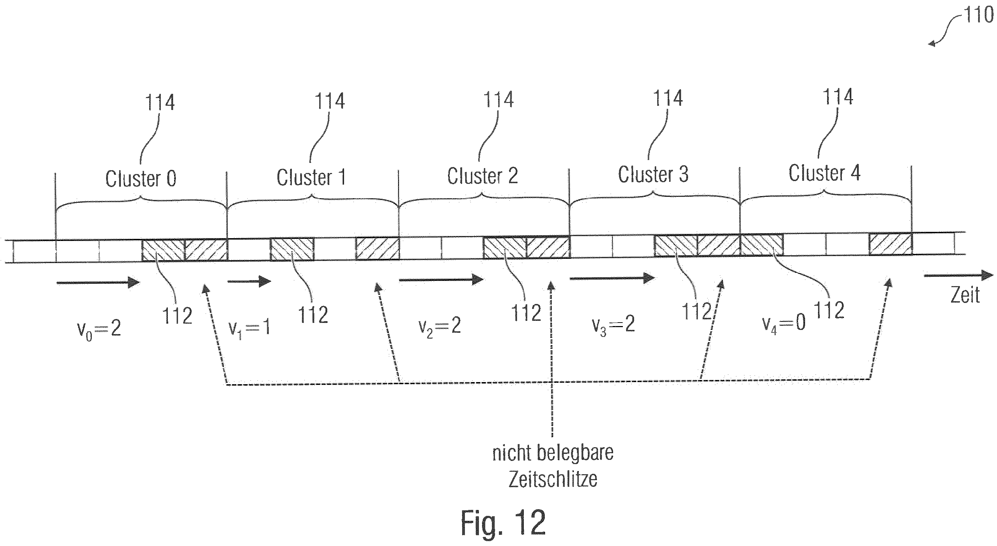

Für den Fall, dass ein Mindestabstand zwischen zwei aufeinanderfolgenden Zeitschlitzen des Kanalzugriffsmusters 110 gewährleistet werden soll, können zwischen den Clustern 114 nicht belegbare Bereiche eingebracht werden. Diese können aus einem oder mehreren Zeitschlitzen bestehen, wie dies in Fig. 12 veranschaulicht ist.

Im Detail zeigt Fig. 12 in einem Diagramm auf eine Zeitachse projizierte Ressourcenelemente 112 eines Kanalzugriffsmusters 110 mit einer Aktivitätsrate A=1/4 und einem vorgegebenen Mindestabstand zwischen aufeinander folgenden Zeitschlitzen des Kanalzugriffsmusters 110, gemäß einem Ausführungsbeispiel.

Mit anderen Worten, Fig. 12 zeigt eine beispielhafte Abfolge von genutzten und ungenutzten Zeitschlitzen mit nicht belegbaren Zeitschlitzen, gemäß einem Ausführungsbeispiel.

Wie in Fig. 12 zu erkennen ist, verringert sich aufgrund der nicht belegbaren Zeitschlitze der zulässige Bereich der Verschiebungsvariablen $v_n$ auf den Wertebereich von 0 bis (Clusterlänge-1-Länge des nicht belegbaren Bereichs).

Je nach gewählter Aktivitätsrate kann es sein, dass die Cluster 114 unterschiedliche Längen aufweisen müssen, um die gewünschte Aktivitätsrate zu erzielen. In diesem Fall variiert der Wertebereich von $v_n$ entsprechend der jeweiligen

Clusterlänge. Um z.B. eine Aktivitätsrate von 40% einzustellen, können sich Cluster der Länge zwei und der Länge drei abwechseln.

### 4. Kanalzugriffsmuster mit Bereichen unterschiedlicher Aktivitätsrate

Datenpakete, die den Empfänger möglichst schnell erreichen sollen (kurze Latzenzzeit), benötigen bei der Übertragung möglichst dicht aufeinanderfolgende Kanalzugriffe, d.h. eine vergleichsweise hohe Aktivitätsrate im Kanalzugriffsmuster.

Bei Datenpaketen, bei denen hingegen die Übertragungssicherheit (z.B. hohe Robustheit gegen externe Störer) im Vordergrund steht, kann eine Verteilung der Aussendung über einen längeren Zeitraum vorteilhaft sein, mithin also eine vergleichsweise niedrige Aktivitätsrate im Kanalzugriffsmuster günstig sein. Dasselbe gilt für Geräte, bei denen eine zeitlich entzerrte Energieentnahme aus der Batterie (zeitlich gestreckte Sendeaktivität) gewünscht wird.

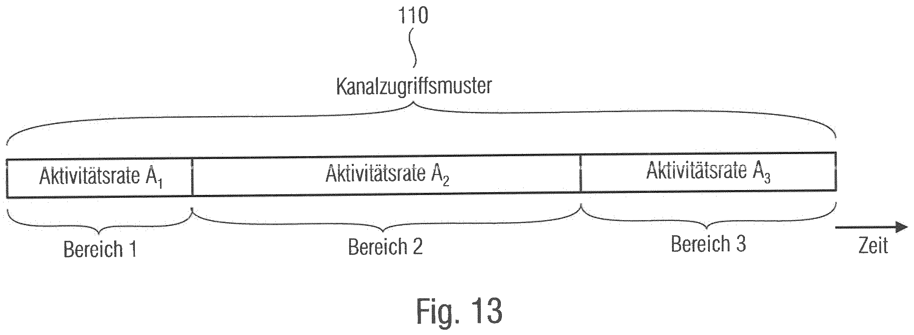

Wie oben dargestellt, kann durch geeignete Maßnahmen die Aktivitätsrate, d.h. die Frequenz des Kanalzugriffs, vorgegeben werden. Um in einem Netzwerk den ggf. unterschiedlichen Anforderungen gerecht zu werden, wird kann ein Kanalzugriffsmuster so gestaltet werden, dass es Bereiche mit unterschiedlichen Aktivitätsraten aufweist. Dies ist in Fig. 13 exemplarisch dargestellt. Je nach individueller Anforderung können Endgeräte dann z.B. in dem für sie geeigneten Bereich senden.

Im Detail zeigt Fig. 13 eine zeitliche Aufteilung eines Kanalzugriffsmusters 110 in Bereiche unterschiedlicher Aktivitätsrate $A_1$, $A_2$ und $A_3$, gemäß einem Ausführungsbeispiel.

Mit anderen Worten, Fig. 13 zeigt ein Beispiel für ein Kanalzugriffsmuster mit drei Bereichen unterschiedlicher Aktivitätsrate innerhalb des Kanalzugriffsmusters 110.

### 5. Bedarfsabhängige (dynamische) Anpassung der Aktivitätsrate des Kanalzugriffsmusters

In Netzwerken (oder Kommunikationssystemen) 102 können zu unterschiedlichen Zeitpunkten unterschiedliche Lastsituationen vorliegen. Wie weiter oben ausgeführt, kann über die Gestaltung das Kanalzugriffsmusters 110 (d.h. dessen Aktivitätsrate bzw. mittlerer zeitlicher Dichte) eine Festlegung des aktiv nutzbaren Ressourcenvorrats für dieses Netzwerk erfolgen.

Das Bereitstellen eines hohen Ressourcenvorrats (hohe Aktivitätsrate) bei niedriger tatsächlicher Last kann insbesondere bei batteriebetriebenen Geräten nachteilig sein. Als Beispiel sei hier eine batteriebetriebene Basisstation (z.B. eines PAN-Netzwerks, ggf. im sog. Repeaterbetrieb), genannt, welche während aller aktiven Ressourcen des Kanalzugriffsmusters den Empfänger betreibt und damit Energie einsetzt.

Daher kann es sinnvoll sein, die mittlere Aktivitätsrate, also die zeitliche Dichte der durch das Kanalzugriffsmuster 110 angebotenen Ressourcen, den vorliegenden Lastverhältnissen dynamisch anzupassen. Wenn die Aktivitätsrate des Kanalzugriffsmusters 110 geändert ist, wird dies den Teilnehmern im Netzwerk entsprechend signalisiert, wofür z.B. das Baken-Signal (oder auch dedizierte Signalisierungsressourcen) in Frage kommt.

Befindet sich ein Endgerät 106 in einem längeren Ruhezustand (Energiesparmodus), so kann es vorkommen, dass es die während des Ruhezustands ausgesendete Signalisierungsinformation der Basisstation 104 über ein ggf. geändertes Kanalzugriffsmuster nicht erhält. In einem solchen Szenario kann es sinnvoll sein, dass ein Kanalzugriffsmuster 110 einen Mindestvorrat an (Grund-)Ressourcen bereitstellt, der jederzeit und ohne besondere Signalisierung zur Verfügung steht, sowie einen zusätzlichen Vorrat an Ressourcen, der lastabhängig hinzugefügt werden kann und einer entsprechenden Signalisierung unterliegt.

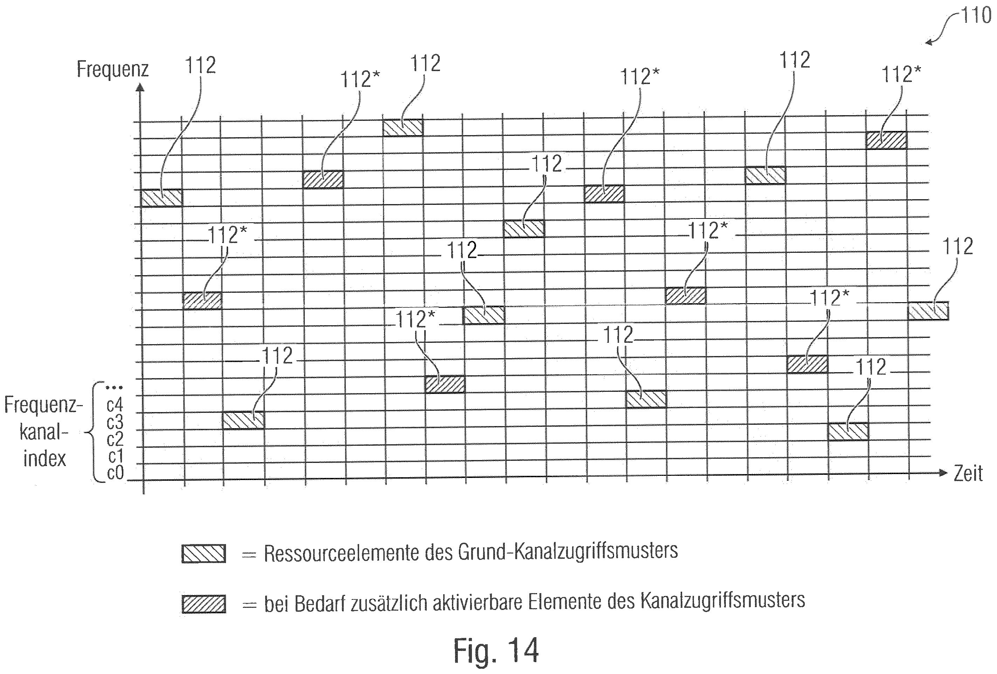

Im obigen Sinne dem Kanalzugriffsmuster zusätzlich hinzugefügte Ressourcen können z.B. zeitlich nach den Grundressourcen angeordnet sein oder auch mit diesen verschränkt im Zeit-/Frequenzraster angeordnet sein, wie dies in Fig. 14 gezeigt ist.

Im Detail zeigt Fig. 14 in einem Diagramm eine durch ein Kanalzugriffsmuster 110 definierte frequenz- und zeitsprungbasierte Belegungen der Ressourcen 112 des Frequenzbands, wobei das Kanalzugriffsmuster 110 zusätzlich bei Bedarf aktivierbare Ressourcen 112* aufweist, gemäß einem Ausführungsbeispiel der vorliegenden Erfindung. Dabei beschreibt die Ordinate die Frequenzkanalindizes und die Abszisse die Zeitschlitzindizes.

Mit anderen Worten, Fig. 14 zeigt ein Beispiel für verschränkte Grund- und Zusatzressourcen.

### 6. Adaptive Frequenzbereichsbelegung

In bestimmten unlizenzierten Frequenzbändern können Nutzer ohne regulatorische Einschränkungen ggf. selbst entscheiden, welche Frequenzbereiche sie innerhalb des Frequenzbands nutzen. Dies kann dazu führen, dass bestimmte Bereiche des zur Verfügung stehenden Frequenzbands stärker durch externe Nutzer belegt werden als andere und somit stärkeren Störungen ausgesetzt sind.

Wenn eine Basisstation 104 eine solche mittel- oder langfristige asymmetrische Auslastung des Frequenzbands feststellt (z.B. durch frequenzkanalweise Signal-zu-Störleistungs-Schätzungen auf Basis empfangener Signale), kann der überdurchschnittlich stark belegte Bereich des Frequenzbands für die Nutzung durch das eigene Netzwerk gemieden werden, indem die zugehörigen Frequenzkanäle nicht in das Kanalzugriffsmuster mit aufgenommen werden. Dies ist im Frequenz-/Zeitpunkt-Zuordner (siehe Fig. 5 oder 6) zu berücksichtigen und wird allen Netzwerkteilnehmern in geeigneter Weise signalisiert.

Die Gruppe der ausgeklammerten Frequenzkanäle kann z.B. durch einen entsprechenden Start- und Endfrequenzkanalindex oder durch einen Startfrequenzkanalindex und eine folgende Kanalanzahl beschrieben werden.

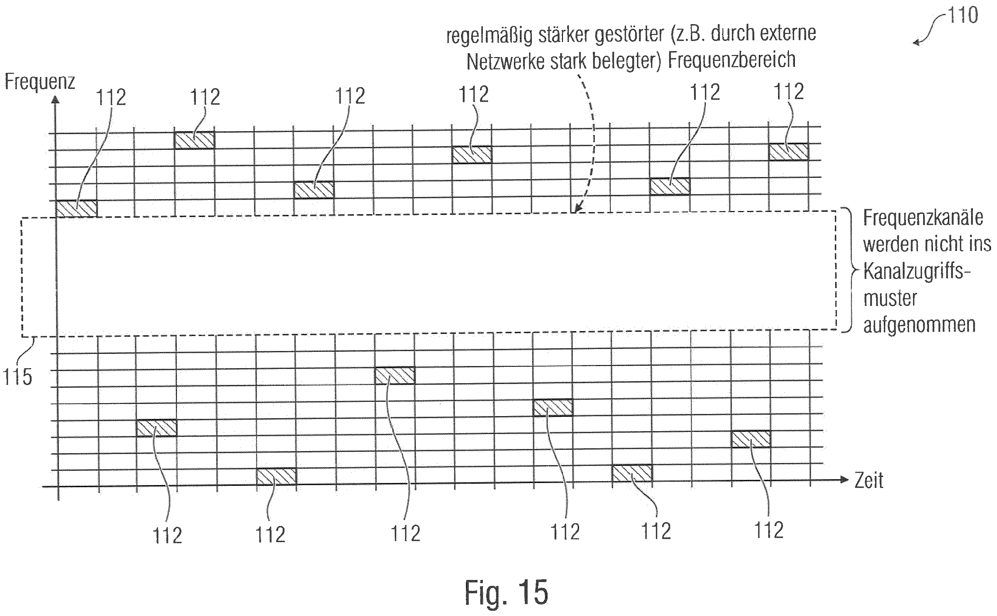

Fig. 15 zeigt in einem Diagramm eine durch ein Kanalzugriffsmuster 110 definierte frequenz- und zeitsprungbasierte Belegungen der Ressourcen 112 des Frequenzbands, wobei ein regelmäßig stärker gestörter Frequenzbereich 115 des Frequenzbands nicht durch das Kanalzugriffsmuster 110 belegt wird, gemäß einem Ausführungsbeispiel der vorliegenden Erfindung. Dabei beschreibt die Ordinate die Frequenzkanalindizes und die Abszisse die Zeitschlitzindizes.

Wie in Fig. 15 zu erkennen ist, wird bei der Erzeugung des Kanalzugriffsmusters 110 ein regelmäßig stärker gestörter (z.B. durch externe Netzwerke stark belegter) Frequenzbereich 115 berücksichtigt. Frequenzkanäle dieses Frequenzbereichs 115 werden somit nicht ins Kanalzugriffsmuster 110 aufgenommen.

Mit anderen Worten, Fig. 15 zeigt ein Beispiel für Ausklammerung stark gestörter Frequenzkanäle aus dem Kanalzugriffsmuster.

Mit der Meidung von störanfälligen Frequenzbereichen für die Datenübertragung im eigenen Netzwerk erfolgt gleichzeitig ein gewisser Lastausgleich über das Frequenzband, indem andere Netzwerke in den bereits stark ausgelasteten Frequenzbereichen keine zusätzlichen Störungen erfahren.

### 7. Bündelung von Ressourcenelementen im Frequenzbereich (Frequenzkanalbündelung)

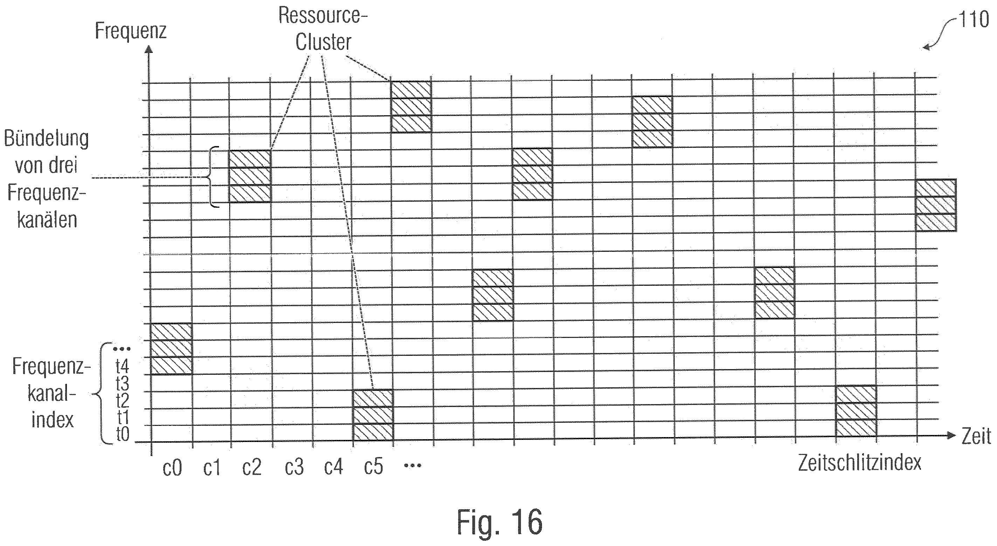

Je nach eingesetzter Hard- und Software ist es möglich, dass eine Basisstation 104 auf mehreren Frequenzkanälen gleichzeitig empfangen kann (Frequenzkanalbündelung). In diesem Fall ist es gerade bei höher ausgelasteten Systemen vorteilhaft, die Anzahl der innerhalb des Netzwerks angebotenen Ressourceelemente in der Frequenzdimension entsprechend zu erhöhen und mehrere Frequenzkanäle innerhalb eines Zeitschlitzes in das Kanalzugriffsmuster aufzunehmen, wie dies in Fig. 16 gezeigt ist.

Im Detail zeigt Fig. 16 in einem Diagramm eine durch ein Kanalzugriffsmuster 110 definierte frequenz- und zeitsprungbasierte Belegungen der Ressourcen 112 des Frequenzbands, wobei Ressourcen 112 im Frequenzbereich gebündelt werden, gemäß einem Ausführungsbeispiel. Dabei beschreibt die Ordinate die Frequenzkanalindizes und die Abszisse die Zeitschlitzindizes.

Mit anderen Worten, Fig. 16 zeigt eine beispielhafte Darstellung des Kanalzugriffsmusters 110 bei Bündelung von je drei benachbarten Frequenzkanälen zu Ressourcen-Clustern. Dabei wird in Fig. 16 beispielhaft die Bündelung von jeweils drei Frequenzkanälen dargestellt. Jede Gruppe von Ressource-Elementen eines Zeitschlitzes kann dabei als "Ressource-Cluster" bezeichnet werden. Das Kanalzugriffsmuster 110 kann hierbei ergänzt werden um die Information über die Anzahl der Frequenzkanäle, die ein Ressource-Cluster konstituieren.

Als weiteres Ausführungsbeispiel sei erwähnt, dass die zu Ressource-Clustern gruppierten Frequenzkanäle nicht notwendigerweise unmittelbar benachbart sein müssen.

### 8. Weitere Ausführungsbeispiele

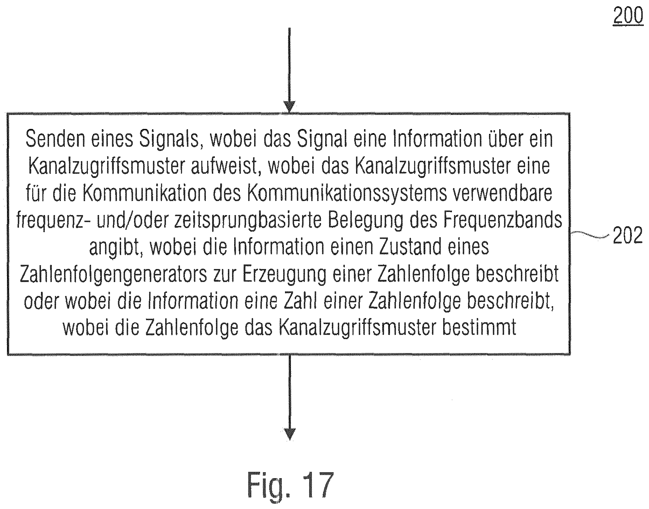

Fig. 17 zeigt ein Flussdiagramm eines Verfahren 200 zum Betreiben einer Basisstation eines Kommunikationssystems, das in einem Frequenzband drahtlos kommuniziert, welches von einer Mehrzahl von Kommunikationssystemen zur Kommunikation genutzt wird, gemäß einem Ausführungsbeispiel der vorliegenden Erfindung. Das Verfahren 200 umfasst einen Schritt 202 des Sendens eines Signals, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt, wobei die Information einen Zustand eines Zahlenfolgengenerators zur Erzeugung einer Zahlenfolge beschreibt oder wobei die Information eine Zahl einer Zahlenfolge beschreibt, wobei die Zahlenfolge das Kanalzugriffsmuster bestimmt.

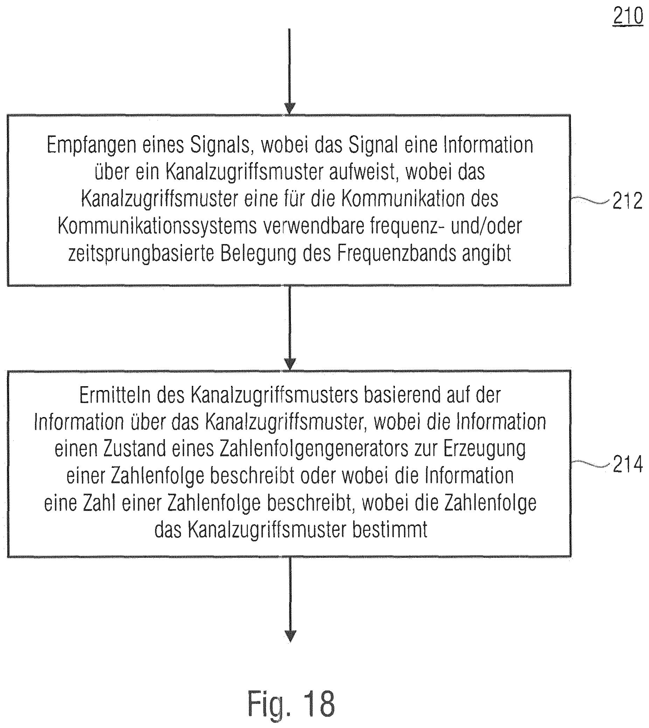

Fig. 18 zeigt ein Flussdiagramm eines Verfahren 210 zum Betreiben eines Endpunkts eines Kommunikationssystems, das in einem Frequenzband drahtlos kommuniziert, welches von einer Mehrzahl von Kommunikationssystemen zur Kommunikation genutzt wird, gemäß einem Ausführungsbeispiel der vorliegenden Erfindung. Das Verfahren 210 umfasst einen Schritt 212 des Empfangens eines Signals, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt. Ferner umfasst das Verfahren 210 einen Schritt 214 des Ermittelns des Kanalzugriffsmusters basierend auf der Information über das Kanalzugriffsmuster, wobei die Information einen Zustand eines Zahlenfolgengenerators zur Erzeugung einer Zahlenfolge beschreibt oder wobei die Information eine Zahl einer Zahlenfolge beschreibt, wobei die Zahlenfolge das Kanalzugriffsmuster bestimmt.

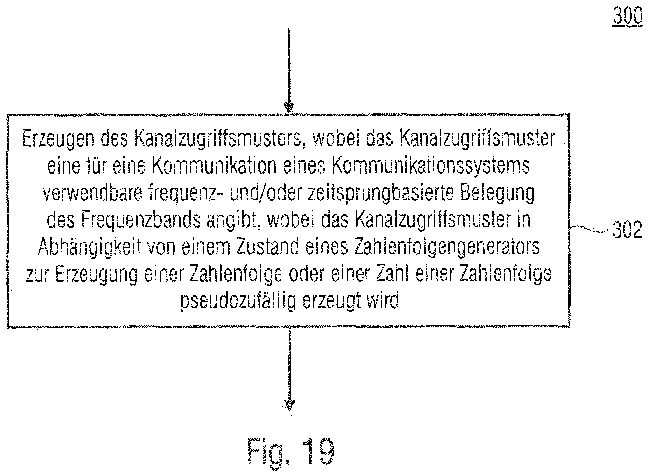

Fig. 19 zeigt ein Flussdiagramm eines Verfahrens 300 zum Erzeugen eines Kanalzugriffsmusters, gemäß einem Ausführungsbeispiel der vorliegenden Erfindung. Das Verfahren 300 umfasst einen Schritt 302 des Erzeugens des Kanalzugriffsmusters, wobei das Kanalzugriffsmuster eine für eine Kommunikation eines Kommunikationssystems verwendbare frequenz- und/oder zeitsprungbasierte Belegung des Frequenzbands angibt, wobei das Kommunikationssystem in einem Frequenzband drahtlos kommuniziert, welches von einer Mehrzahl von Kommunikationssystemen zur Kommunikation genutzt wird, wobei das Kanalzugriffsmuster in Abhängigkeit von einem Zustand eines Zahlenfolgengenerators zur Erzeugung einer Zahlenfolge oder einer Zahl einer Zahlenfolge pseudozufällig erzeugt wird.

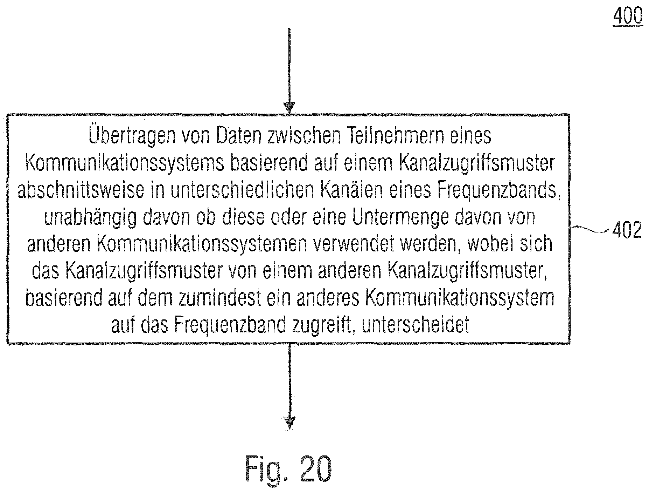

Fig. 20 zeigt ein Flussdiagramm eines Verfahrens 400 zum Betreiben eines Kommunikationssystems, welches in einem Frequenzband drahtlos kommuniziert, welches von einer Mehrzahl von Kommunikationssystemen zur Kommunikation genutzt wird. Das Verfahren 400 umfasst einen Schritt 402 des Übertragens von Daten zwischen Teilnehmern des Kommunikationssystems basierend auf einem Kanalzugriffsmuster abschnittsweise in unterschiedlichen Kanälen des Frequenzbands, unabhängig davon ob diese oder eine Untermenge davon von anderen Kommunikationssystemen verwendet werden, wobei sich das Kanalzugriffsmuster von einem anderen Kanalzugriffsmuster, basierend auf dem zumindest ein anderes Kommunikationssystem der Mehrzahl von anderen Kommunikationssystemen auf das Frequenzband zugreift, unterscheidet.

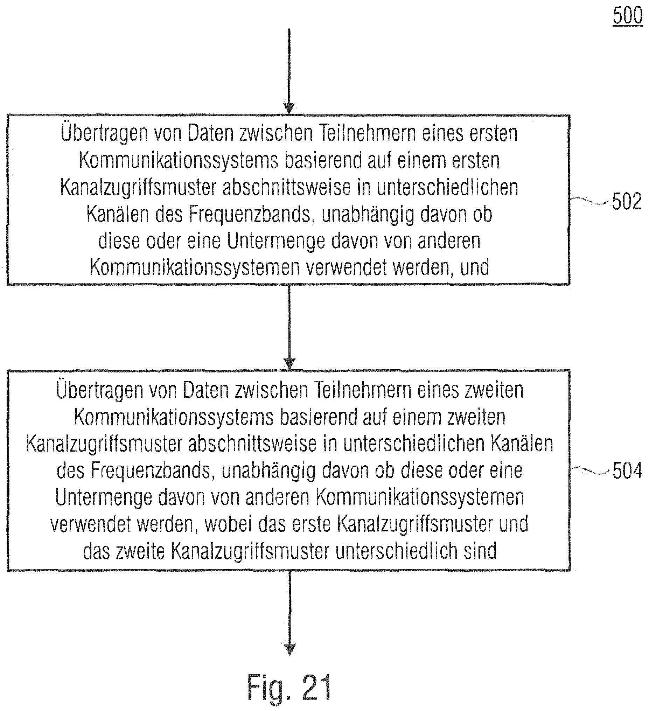

Fig. 21 zeigt ein Flussdiagramm eines Verfahrens 500 zum Betreiben von zwei Kommunikationssystemen in einem Frequenzband, welches von einer Mehrzahl von Kommunikationssystemen zur drahtlosen Kommunikation genutzt wird. Das Verfahren 500 umfasst einen Schritt 502 des Übertragens von Daten zwischen Teilnehmern des ersten Kommunikationssystems basierend auf einem ersten Kanalzugriffsmuster abschnittsweise in unterschiedlichen Kanälen des Frequenzbands, unabhängig davon ob diese oder eine Untermenge davon von anderen Kommunikationssystemen verwendet werden. Ferner umfasst das Verfahren einen Schritt 504 des Übertragens von Daten zwischen Teilnehmern des zweiten Kommunikationssystems basierend auf einem zweiten Kanalzugriffsmuster abschnittsweise in unterschiedlichen Kanälen des Frequenzbands, unabhängig davon ob diese oder eine Untermenge davon von anderen Kommunikationssystemen verwendet werden, wobei das erste Kanalzugriffsmuster und das zweite Kanalzugriffsmuster unterschiedlich sind.

Ausführungsbeispiele beziehen sich auf die Erzeugung und Anwendung von Netzwerk-individuellen Kanalzugriffsmustern, wobei diese zumindest eine aus folgenden Eigenschaften aufweisen:

- Die Kanalzugriffsmuster enthalten untereinander möglichst wenige überlappende Teilsequenzen,
- es gibt (z.B. in Bereichen mit hoher Netzwerkdichte) einen großen Vorrat von Kanalzugriffsmustern,
- die Kanalzugriffsmuster sind so gestaltet, dass sie eine sehr hohe Periodizität aufweisen,
- die Kanalzugriffsmuster führen (bei Vorliegen entsprechender Anforderungen) zu einer im Mittel gleichmäßigen Nutzung der zur Verfügung stehenden Frequenzkanäle,
- die Signalisierung des angewandten Musters erfolgt durch die koordinierende Instanz mit möglichst wenig Signalisierungsinformation, und
- Endgeräte können, bereits bei einmaligem, vollständigem Erhalt der Signalisierung des Kanalzugriffsmusters den Inhalt des Kanalzugriffsmusters zu beliebigen, zukünftigen Zeitpunkten bestimmen (dies ermöglicht Endgeräten, z.B. aus Energiespargründen längere Empfangspausen einzulegen und bei Wiedereinschalten dennoch das dann jeweils gültige Kanalzugriffsmuster auf der Basis von vor der Empfangspause erhaltener Information zu ermitteln).

Ausführungsbeispiele finden Anwendung in Systemen zur Funkübertragung von Daten von Endgeräten zu einer Basisstation oder von einer/mehrerer Basisstationen zu Endgeräten. Beispielsweise kann es sich bei einem System dabei um ein persönliches Netzwerk (engl. Personal Area Network, PAN) oder ein Niedrigenergie-Weitverkehrsnetzwerk (engl. Low Power Wide Area Network, LPWAN) handeln, wobei die Endgeräte z.B. batteriebetriebene Sensoren (Sensorknoten) sein können.

Ausführungsbeispiele zielen auf Anwendungsfälle, in welchen eine Vielzahl von untereinander nicht koordinierten funkbasierten Netzwerken in einem gemeinsamen Frequenzband betrieben werden, wobei die Teilnehmer unterschiedlicher Netzwerke wechselseitig in Empfangsreichweite sind und deren Signale untereinander somit eine potentielle Störquelle darstellen (siehe Fig. 2).

Wie bereits erwähnt können die hierin beschriebenen Ausführungsbeispiele eingesetzt werden, um Daten basierend auf dem Telegram-Splitting-Verfahren zwischen den Teilnehmern des Kommunikationssystems zu übertragen. Beim Telegram-Splitting-Verfahren werden Daten, wie z.B. ein Telegramm oder Datenpaket, in eine Mehrzahl von Sub-Datenpakete (oder Teildatenpakte, oder Teilpakete) aufgeteilt und die Sub-Datenpakete unter Verwendung eines Zeit- und/oder Frequenzsprungmusters in der Zeit und/oder in der Frequenz verteilt von einem Teilnehmer zu einem anderen Teilnehmer (z.B. von der Basistation zum Endpunkt, oder vom Endpunkt zur Basistation) des Kommunikationssystems übertragen, wobei der Teilnehmer, der die Sub-Datenpakete empfängt, diese wieder zusammenfügt (oder kombiniert), um das Datenpaket zu erhalten. Jedes der Sub-Datenpakete enthält dabei nur einen Teil des Datenpakets. Das Datenpaket kann ferner kanalcodiert sein, so dass zum fehlerfreien Decodieren des Datenpakets nicht alle Sub-Datenpakete, sondern nur ein Teil der Sub-Datenpakete erforderlich ist.

Bei der Übertragung von Daten basierend auf dem Telegram-Splitting-Verfahren, können die Sub-Datenpakete in einer Teilmenge (z.B. einer Auswahl) der verfügbaren Ressourcen des Kanalzugriffsmusters verteilt übertragen werden. Beispielsweise kann pro Ressource ein Sub-Datenpaket übertragen werden.

Mit anderen Worten, Ausführungsbeispiele können vorteilhaft in Systemen eingesetzt werden, in welchen eine Nachricht (Datenpaket) in mehreren Teil-Datenpaketen übertragen wird (sogenanntes Telegram Splitting, siehe z.B. DE 10 2011 082 098).

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen.

Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Literaturverzeichnis

[1] DE 10 2011 082 098 B4
[2] DE 10 2017 206 236

Abkürzungsverzeichnis

CRC:     Cyclic Redundancy Check
LPWAN:   Low Power Wide Area Network
LSB:     Least Significant Bit(s)
MSB:     Most Significant Bit(s)
PAN:     Personal Area Network
TLS:     Transport Layer Security
TSMA:    Telegram-Splitting-Multiple-Access

Anhang

MATLAB-Code zu Abschnitt 2:

```
N_freq=72;
N_time=1500000;

N_low=21;
N_high=51;

rand('state',0);
fc=zeros(1,N_time);

R_f=randint(1,10*N_time,2*N_high+1);
R_f=R_f-N_high;
idx=find(R_f>-N_low & R_f<N_low);
R_f(idx)=[];
R_f=R_f(1:N_time);
fc(1)=30;
for p=1:N_time-1;
    fc(p+1)=mod(fc(p)+R_f(p),N_freq); % Frequenzkanalindex
end
Delt_fc1 = (fc(2:end)-fc(1:end-1)); % Indexdifferenz aufeinanderfolgender Zugriffe

figure(1); hist(Delt_fc1,-72:72);
```

```
h=gca; set(h,'XLim', [-72 72]);
xlabel('\Deltafi'); ylabel('Anzahl der Ereignisse");
title('Histogramm von \Deltafi');
```

**Patentansprüche**

1. Basisstation (104) für ein Kommunikationssystem (102),

   wobei das Kommunikationssystem (102) in einem Frequenzband drahtlos kommuniziert, welches von einer Mehrzahl von Kommunikationssystemen zur Kommunikation genutzt wird,
   wobei die Basisstation (104) ausgebildet ist, um ein Signal (120) zu senden, wobei das Signal (120) eine Information über ein Kanalzugriffsmuster (110) aufweist, wobei das Kanalzugriffsmuster (110) eine für die Kommunikation des Kommunikationssystems verwendbare frequenz- und/oder zeitsprungbasierte Belegung des Frequenzbands angibt,
   wobei die Information einen Zustand (142) eines Zahlenfolgengenerators (134) zur Erzeugung einer Zahlenfolge beschreibt oder wobei die Information eine Zahl (143_1,143_2) einer Zahlenfolge beschreibt, wobei die Zahlenfolge das Kanalzugriffsmuster (110) bestimmt,
   wobei die Basisstation (104) ausgebildet ist, um das Kanalzugriffsmuster (110) in Abhängigkeit von einer individuellen Information des Kommunikationssystems (102) zu ermitteln,
   wobei die Basisstation (104) ausgebildet ist, um in Abhängigkeit von

   - dem Zustand (142) des Zahlenfolgengenerators (134) oder einer von dem Zustand (142) des Zahlenfolgengenerators (134) abgeleiteten Zahl (142') der Zahlenfolge, oder der Zahl (143_1,143_2) der Zahlenfolge, und
   - einer individuellen Information des Kommunikationssystems (102)

   eine Pseudozufallszahl R zu ermitteln, wobei die Pseudozufallszahl R das Kanalzugriffsmuster (110) bestimmt.

2. Basisstation (104) nach dem vorangehenden Anspruch,
   wobei die individuelle Information des Kommunikationssystems (102) eine immanente Information des Kommunikationssystems (102) ist.

3. Basisstation (104) nach dem vorangehenden Anspruch,
   wobei die immanente Information des Kommunikationssystems (102) ein netzwerkspezifischer Identifikator (140) ist.

4. Basisstation (104) nach dem vorangehenden Anspruch,
   wobei der netzwerkspezifische Identifikator eine Identifikation des Kommunikationssystems (102) ist.

5. Basisstation (104) nach einem der vorangehenden Ansprüche,

   wobei die Basisstation (104) ausgebildet ist, um

   - den Zustand (142) des Zahlenfolgengenerators (134), oder eine von dem Zustand (142) des Zahlenfolgengenerators (134) abgeleitete Zahl (142') der Zahlenfolge, oder die Zahl (143_1,143_2) der Zahlenfolge, und
   - die individuelle Information des Kommunikationssystems (102)

   unter Verwendung einer Abbildungsfunktion auf eine Zeitinformation (148) und eine Frequenzinformation (146) abzubilden,
   wobei die Zeitinformation (148) und die Frequenzinformation (146) eine Ressource (112) des Kanalzugriffsmusters (110) beschreiben.

6. Endpunkt (106_1) für ein Kommunikationssystem (102),

   wobei das Kommunikationssystem (102) in einem Frequenzband drahtlos kommuniziert, welches von einer Mehrzahl von Kommunikationssystemen zur Kommunikation genutzt wird,
   wobei der Endpunkt (106_1) ausgebildet ist, um ein Signal (120) zu empfangen, wobei das Signal (120) eine Information über ein Kanalzugriffsmuster (110) aufweist, wobei das Kanalzugriffsmuster (110) eine für die Kommunikation des Kommunikationssystems (102) verwendbare frequenz- und/oder zeitsprungbasierte Belegung des Frequenzbands angibt,

wobei der Endpunkt (106) ausgebildet ist, um das Kanalzugriffsmuster (110) basierend auf der Information über das Kanalzugriffsmuster (110) zu ermitteln,

wobei die Information einen Zustand (142) eines Zahlenfolgengenerators (134) zur Erzeugung einer Zahlenfolge beschreibt oder wobei die Information eine Zahl (143_1,143_2) einer Zahlenfolge beschreibt, wobei die Zahlenfolge das Kanalzugriffsmuster (110) bestimmt,

wobei der Endpunkt (106_1) ausgebildet ist, um das Kanalzugriffsmuster (110) in Abhängigkeit von einer individuellen Information des Kommunikationssystems (102) zu ermitteln,

wobei der Endpunkt (106_1) ausgebildet ist, um in Abhängigkeit von

- dem Zustand (142) des Zahlenfolgengenerators (134) oder einer von dem Zustand (142) des Zahlenfolgengenerators (134) abgeleiteten Zahl (142') der Zahlenfolge, oder der Zahl (143_1,143_2) der Zahlenfolge, und
- einer individuellen Information des Kommunikationssystems (102)

eine Pseudozufallszahl R zu ermitteln, wobei die Pseudozufallszahl R das Kanalzugriffsmuster (110) bestimmt.

7. Endpunkt (106_1) nach dem vorangehenden Anspruch,
wobei die individuelle Information des Kommunikationssystems (102) eine immanente Information des Kommunikationssystems (102) ist.

8. Endpunkt (106_1) nach dem vorangehenden Anspruch,
wobei die immanente Information des Kommunikationssystems (102) ein netzwerkspezifischer Identifikator ist.

9. Endpunkt (106_1) nach dem vorangehenden Anspruch,
wobei der netzwerkspezifische Identifikator eine Identifikation des Kommunikationssystems (102) ist.

10. Endpunkt (106) nach einem der Ansprüche 6 bis 9,

wobei der Endpunkt (106_1) ausgebildet ist, um

- den Zustand (142) des Zahlenfolgengenerators (134), oder eine von dem Zustand (142) des Zahlenfolgengenerators (134) abgeleitete Zahl (142') der Zahlenfolge, oder die Zahl (143_1,143_2) der Zahlenfolge, und
- die individuelle Information des Kommunikationssystems (102)

unter Verwendung einer Abbildungsfunktion auf eine Zeitinformation (148) und eine Frequenzinformation (146) abzubilden,
wobei die Zeitinformation (148) und die Frequenzinformation (146) eine Ressource (112) des Kanalzugriffsmusters (110) beschreiben.

11. Verfahren (200) zum Betreiben einer Basisstation (104) für ein Kommunikationssystem (102), wobei das Kommunikationssystem (102) in einem Frequenzband drahtlos kommuniziert, welches von einer Mehrzahl von Kommunikationssystemen zur Kommunikation genutzt wird, wobei das Verfahren aufweist:

Senden (202) eines Signals (120), wobei das Signal (120) eine Information über ein Kanalzugriffsmuster (110) aufweist, wobei das Kanalzugriffsmuster (110) eine für die Kommunikation des Kommunikationssystems (102) verwendbare frequenz- und/oder zeitsprungbasierte Belegung des Frequenzbands angibt,
wobei die Information einen Zustand (142) eines Zahlenfolgengenerators (134) zur Erzeugung einer Zahlenfolge beschreibt oder wobei die Information eine Zahl (143_1,143_2) einer Zahlenfolge beschreibt, wobei die Zahlenfolge das Kanalzugriffsmuster bestimmt,
wobei das Kanalzugriffsmuster (110) in Abhängigkeit von einer individuellen Information des Kommunikationssystems (102) ermittelt wird,
Ermitteln, in Abhängigkeit von

- dem Zustand (142) des Zahlenfolgengenerators (134) oder einer von dem Zustand (142) des Zahlenfolgengenerators (134) abgeleiteten Zahl (142') der Zahlenfolge, oder der Zahl (143_1,143_2) der Zahlenfolge, und

- einer individuellen Information des Kommunikationssystems (102)

einer Pseudozufallszahl R, wobei die Pseudozufallszahl R das Kanalzugriffsmuster (110) bestimmt.

12. Verfahren (210) zum Betreiben eines Endpunkts (106_1) für ein Kommunikationssystem (102), wobei das Kommunikationssystem (102) in einem Frequenzband drahtlos kommuniziert, welches von einer Mehrzahl von Kommunikationssystemen zur Kommunikation genutzt wird, wobei das Verfahren aufweist:

Empfangen (212) eines Signals (120), wobei das Signal (120) eine Information über ein Kanalzugriffsmuster (110) aufweist, wobei das Kanalzugriffsmuster (110) eine für die Kommunikation des Kommunikationssystems (102) verwendbare frequenz- und/oder zeitsprungbasierte Belegung des Frequenzbands angibt,
Ermitteln (214) des Kanalzugriffsmusters (110) basierend auf der Information über das Kanalzugriffsmuster, wobei die Information einen Zustand (142) eines Zahlenfolgengenerators (134) zur Erzeugung einer Zahlenfolge beschreibt oder wobei die Information eine Zahl (143_1,143_2) einer Zahlenfolge beschreibt, wobei die Zahlenfolge das Kanalzugriffsmuster bestimmt,
wobei das Kanalzugriffsmuster (110) in Abhängigkeit von einer individuellen Information des Kommunikationssystems (102) ermittelt wird,
Ermitteln, in Abhängigkeit von

- dem Zustand (142) des Zahlenfolgengenerators (134) oder einer von dem Zustand (142) des Zahlenfolgengenerators (134) abgeleiteten Zahl (142') der Zahlenfolge, oder der Zahl (143_1,143_2) der Zahlenfolge, und
- einer individuellen Information des Kommunikationssystems (102)

eine Pseudozufallszahl R zu ermitteln, wobei die Pseudozufallszahl R das Kanalzugriffsmuster (110) bestimmt.

13. Computerprogramm zur Durchführung des Verfahrens nach einem der Ansprüche 11 bis 12, wenn das Computerprogramm auf einem Computer oder Mikroprozessor abläuft.


**Claims**

1. Base station (104) for a communication system (102),

wherein the communication system (102) wirelessly communicates in a frequency band that is used for communication by a plurality of communication systems,
wherein the base station (104) is configured to transmit a signal (120), wherein the signal (120) comprises information about a channel access pattern (110), wherein the channel access pattern (110) indicates a frequency hop-based and/or time hop-based occupancy of the frequency band that is usable for the communication of the communication system,
wherein the information describes a state (142) of a numerical sequence generator (134) for generating a numerical sequence, or wherein the information describes a number (143_1,143_2) of a numerical sequence, wherein the numerical sequence determines the channel access pattern (110),
wherein the base station (104) is configured to identify the channel access pattern (110) as a function of individual information of the communication system (102),
wherein the base station (104) is configured to identify, as a function of

- the state (142) of the numerical sequence generator (134) or a number (142') of the numerical sequence derived from the state (142) of the numerical sequence generator (134), or the number (143_1, 143_2) of the numerical sequence, and
- individual information of the communication system (102),
a pseudo-random number R, wherein the pseudo-random number R determines the channel access pattern (110).

2. Base station (104) according to the preceding claim,
wherein the individual information of the communication system (102) is intrinsic information of the communication system (102).

3. Base station (104) according to the preceding claim,
wherein the intrinsic information of the communication system (102) is a network-specific identifier (140).

4. Base station (104) according to the preceding claim,
wherein the network-specific identifier is an identification of the communication system (102).

5. Base station (104) according to any one of the preceding claims,

wherein the base station (104) is configured to map, by using a mapping function,

- the state (142) of the numerical sequence generator (134) or a number (142') of the numerical sequence derived from the state (142) of the numerical sequence generator (134), or the number (143_1,143_2) of the numerical sequence, and
- the individual information of the communication system (102)

onto time information (148) and frequency information (146),
wherein the time information (148) and the frequency information (146) describe a resource (112) of the channel access pattern (110).

6. Terminal point (106_1) for a communication system (102),

wherein the communication system (102) wirelessly communicates in a frequency band that is used for communication by a plurality of communication systems,
wherein the terminal point (106_1) is configured to receive a signal (120), wherein the signal (120) comprises information about a channel access pattern (110), wherein the channel access pattern (110) indicates a frequency hop-based and/or time hop-based occupancy of the frequency band that is usable for the communication of the communication system (102),
wherein the terminal point (106) is configured to identify the channel access pattern (110) on the basis of the information about the channel access pattern (110),
wherein the information describes a state (142) of a numerical sequence generator (134) for generating a numerical sequence, or wherein the information describes a number (143_1,143_2) of a numerical sequence, wherein the numerical sequence determines the channel access pattern (110),
wherein the terminal point (106_1) is configured to identify the channel access pattern (110) as a function of individual information of the communication system (102),
wherein the terminal point (106_1) is configured to identify, as a function of

- the state (142) of the numerical sequence generator (134) or a number (142') of the numerical sequence derived from the state (142) of the numerical sequence generator (134), or the number (143_1, 143_2) of the numerical sequence, and
- individual information of the communication system (102),
a pseudo-random number R, wherein the pseudo-random number R determines the channel access pattern (110).

7. Terminal point (106_1) according to the preceding claim,
wherein the individual information of the communication system (102) is intrinsic information of the communication system (102).

8. Terminal point (106_1) according to the preceding claim,
wherein the intrinsic information of the communication system (102) is a network-specific identifier.

9. Terminal point (106_1) according to the preceding claim,
wherein the network-specific identifier is an identification of the communication system (102).

10. Terminal point (106) according to any of claims 6 to 9,

wherein the terminal point (106_1) is configured to map, by using a mapping function,

- the state (142) of the numerical sequence generator (134) or a number (142') of the numerical sequence derived from the state (142) of the numerical sequence generator (134), or the number (143_1,143_2) of the numerical sequence, and
- the individual information of the communication system (102)

onto time information (148) and frequency information (146),
wherein the time information (148) and the frequency information (146) describe a resource (112) of the channel access pattern (110).

11. Method (200) for operating a base station (104) for a communication system (102), wherein the communication system (102) wirelessly communicates in a frequency band that is used for communication by a plurality of communication systems, the method comprising:

transmitting (202) a signal (120), wherein the signal (120) comprises information about a channel access pattern (110), wherein the channel access pattern (110) indicates a frequency hop-based and/or time hop-based occupancy of the frequency band that is usable for the communication of the communication system (102),
wherein the information describes a state (142) of a numerical sequence generator (134) for generating a numerical sequence, or wherein the information describes a number (143_1,143_2) of a numerical sequence, wherein the numerical sequence determines the channel access pattern,
wherein the channel access pattern (110) is identified as a function of individual information of the communication system (102),
identifying, as a function of

- the state (142) of the numerical sequence generator (134) or a number (142') of the numerical sequence derived from the state (142) of the numerical sequence generator (134), or the number (143_1, 143_2) of the numerical sequence, and
- individual information of the communication system (102),
a pseudo-random number R, wherein the pseudo-random number R determines the channel access pattern (110).

12. Method (210) for operating a terminal point (106_1) for a communication system (102), wherein the communication system (102) wirelessly communicates in a frequency band that is used for communication by a plurality of communication systems, the method comprising:

receiving (212) a signal (120), wherein the signal (120) comprises information about a channel access pattern (110), wherein the channel access pattern (110) indicates a frequency hop-based and/or time hop-based occupancy of the frequency band that is usable for the communication of the communication system (102),
identifying (214) the channel access pattern (110) on the basis of the information about the channel access pattern,
wherein the information describes a state (142) of a numerical sequence generator (134) for generating a numerical sequence, or wherein the information describes a number (143_1,143_2) of a numerical sequence, wherein the numerical sequence determines the channel access pattern,
wherein the channel access pattern (110) is identified as a function of individual information of the communication system (102),
identifying, as a function of

- the state (142) of the numerical sequence generator (134) or a number (142') of the numerical sequence derived from the state (142) of the numerical sequence generator (134), or the number (143_1, 143_2) of the numerical sequence, and
- individual information of the communication system (102),
a pseudo-random number R, wherein the pseudo-random number R determines the channel access pattern (110).

13. Computer program for performing the method according to any one of claims 11 to 12 if the computer program runs on a computer or microprocessor.

**Revendications**

1. Station de base (104) pour un système de communication (102),

   le système de communication (102) communiquant sans fil dans une bande de fréquences utilisée par une pluralité de systèmes de communication aux fins de communication,
   la station de base (104) étant conçue pour envoyer un signal (120), ledit signal (120) comportant une information relative à un motif d'accès au canal (110), le motif d'accès au canal (110) indiquant une occupation de la bande de fréquences fondée sur des sauts fréquentiels et/ou temporels, utilisable pour la communication du système de communication,
   l'information décrivant un état (142) d'un générateur de suites de nombres (134) pour générer une suite de nombres, ou l'information décrivant un nombre (143_1, 143_2) d'une suite de nombres, la suite de nombres déterminant le motif d'accès au canal (110),
   la station de base (104) étant conçue pour déterminer le motif d'accès au canal (110) en fonction d'une information individuelle du système de communication (102),
   la station de base (104) étant conçue pour, en fonction de :

   - l'état (142) du générateur de suites de nombres (134), ou un nombre (142') de la suite de nombres dérivé de l'état (142) du générateur de suites de nombres (134), ou le nombre (143_1, 143_2) de la suite de nombres, et
   - d'une information individuelle du système de communication (102)

   déterminer un nombre pseudo-aléatoire R, ledit nombre pseudo-aléatoire R déterminant le motif d'accès au canal (110).

2. Station de base (104) selon la revendication précédente,
   l'information individuelle du système de communication (102) étant une information immanente au système de communication (102).

3. Station de base (104) selon la revendication précédente,
   l'information immanente du système de communication (102) étant un identifiant spécifique au réseau (140).

4. Station de base (104) selon la revendication précédente,
   l'identifiant spécifique au réseau étant une identification du système de communication (102).

5. Station de base (104) selon l'une quelconque des revendications précédentes,

   la station de base (104) étant conçue pour :

   - l'état (142) du générateur de suites de nombres (134), ou un nombre (142') de la suite de nombres dérivé de l'état (142) du générateur de suites de nombres (134), ou le nombre (143_1, 143_2) de la suite de nombres, et
   - l'information individuelle du système de communication (102)

   les associer, au moyen d'une fonction d'application, à une information temporelle (148) et à une information fréquentielle (146),
   l'information temporelle (148) et l'information fréquentielle (146) décrivant une ressource (112) du motif d'accès au canal (110).

6. Terminal (106_1) pour un système de communication (102),

   le système de communication (102) communiquant sans fil dans une bande de fréquences utilisée par une pluralité de systèmes de communication aux fins de communication,
   le terminal (106_1) étant conçu pour recevoir un signal (120), ledit signal (120) comportant une information relative à un motif d'accès au canal (110), le motif d'accès au canal (110) indiquant une occupation de la bande de fréquences fondée sur des sauts fréquentiels et/ou temporels, utilisable pour la communication du système de communication (102),
   le terminal (106) étant conçu pour déterminer le motif d'accès au canal (110) sur la base de l'information relative audit motif d'accès au canal (110),

l'information décrivant un état (142) d'un générateur de suites de nombres (134) pour générer une suite de nombres, ou l'information décrivant un nombre (143_1, 143_2) d'une suite de nombres, la suite de nombres déterminant le motif d'accès au canal (110),

le terminal (106_1) étant conçu pour déterminer le motif d'accès au canal (110) en fonction d'une information individuelle du système de communication (102),

le terminal (106_1) étant conçu pour, en fonction de :

- l'état (142) du générateur de suites de nombres (134), ou un nombre (142') de la suite de nombres dérivé de l'état (142) du générateur de suites de nombres (134), ou le nombre (143_1, 143_2) de la suite de nombres, et
- d'une information individuelle du système de communication (102)

déterminer un nombre pseudo-aléatoire R, ledit nombre pseudo-aléatoire R déterminant le motif d'accès au canal (110).

7.  Terminal (106_1) selon la revendication précédente,
    l'information individuelle du système de communication (102) étant une information immanente au système de communication (102).

8.  Terminal (106_1) selon la revendication précédente,
    l'information immanente du système de communication (102) étant un identifiant spécifique au réseau.

9.  Terminal (106_1) selon la revendication précédente,
    l'identifiant spécifique au réseau étant une identification du système de communication (102).

10. Terminal (106) selon l'une quelconque des revendications 6 à 9,

    le terminal (106_1) étant conçu pour :

    - l'état (142) du générateur de suites de nombres (134), ou un nombre (142') de la suite de nombres dérivé de l'état (142) du générateur de suites de nombres (134), ou le nombre (143_1, 143_2) de la suite de nombres, et
    - l'information individuelle du système de communication (102)

    les associer, au moyen d'une fonction d'application, à une information temporelle (148) et à une information fréquentielle (146),
    l'information temporelle (148) et l'information fréquentielle (146) décrivant une ressource (112) du motif d'accès au canal (110).

11. Procédé (200) de fonctionnement d'une station de base (104) pour un système de communication (102), ledit système de communication (102) communiquant sans fil dans une bande de fréquences utilisée par une pluralité de systèmes de communication aux fins de communication, le procédé comprenant :

    émission (202) d'un signal (120), ledit signal (120) comportant une information relative à un motif d'accès au canal (110), le motif d'accès au canal (110) indiquant une occupation de la bande de fréquences fondée sur des sauts fréquentiels et/ou temporels, utilisable pour la communication du système de communication (102),
    l'information décrivant un état (142) d'un générateur de suites de nombres (134) pour générer une suite de nombres, ou l'information décrivant un nombre (143_1, 143_2) d'une suite de nombres, la suite de nombres déterminant le motif d'accès au canal,
    le motif d'accès au canal (110) étant déterminé en fonction d'une information individuelle du système de communication (102),
    détermination, en fonction de :

    - l'état (142) du générateur de suites de nombres (134), ou un nombre (142') de la suite de nombres dérivé de l'état (142) du générateur de suites de nombres (134), ou le nombre (143_1, 143_2) de la suite de nombres, et
    - d'une information individuelle du système de communication (102)

d'un nombre pseudo-aléatoire R, ledit nombre pseudo-aléatoire R déterminant le motif d'accès au canal (110).

12. Procédé (210) de fonctionnement d'un terminal (106_1) pour un système de communication (102), ledit système de communication (102) communiquant sans fil dans une bande de fréquences utilisée par une pluralité de systèmes de communication aux fins de communication, le procédé comprenant :

réception (212) d'un signal (120), ledit signal (120) comportant une information relative à un motif d'accès au canal (110), le motif d'accès au canal (110) indiquant une occupation de la bande de fréquences fondée sur des sauts fréquentiels et/ou temporels, utilisable pour la communication du système de communication (102),

détermination (214) du motif d'accès au canal (110) sur la base de l'information relative audit motif d'accès au canal,

l'information décrivant un état (142) d'un générateur de suites de nombres (134) pour générer une suite de nombres, ou l'information décrivant un nombre (143_1, 143_2) d'une suite de nombres, la suite de nombres déterminant le motif d'accès au canal,

le motif d'accès au canal (110) étant déterminé en fonction d'une information individuelle du système de communication (102),

détermination, en fonction de :

- l'état (142) du générateur de suites de nombres (134), ou un nombre (142') de la suite de nombres dérivé de l'état (142) du générateur de suites de nombres (134), ou le nombre (143_1, 143_2) de la suite de nombres, et

- d'une information individuelle du système de communication (102)

ladite détermination portant sur un nombre pseudo-aléatoire R, ledit nombre pseudo-aléatoire R déterminant le motif d'accès au canal (110).

13. Programme informatique permettant de mettre en œuvre le procédé selon l'une des revendications 11 à 12, lorsque ledit programme informatique est exécuté sur un ordinateur ou un microprocesseur.

Fig. 1

Fig. 2

EP 3 811 705 B1

(110_1)
Kanalzugriffsmuster
Netzwerk 1

(110_2)
Kanalzugriffsmuster
Netzwerk 2

112_1

112_2    112_1

112_1

112_1

112_2    112_2

112_1

112_2

112_2

112_1

112_1

112_2

112_1

112_1

112_2    112_1

112_2    112_1

112_2

Frequenzkanalindex

(Netz
werk 1)

c4
c3
c2
c1
c0

t0  t1  t2  t3  t4  ···

Zeitschlitzindex
(Netzwerk 1)

Zeit

1 Ressourceelement
bestimmt durch Frequenzkanal und Zeitschlitz

Fig. 3

EP 3 811 705 B1

Fig. 4

Fig. 5

<u>130</u>

132                    135_1                135_2

| netzwerkspezifischer Identifikator | periodischer Bakenindex | periodischer Zeitschlitzindex |

ID ~~~→              140        ~143_1        ~143_2
                              ← Z1         ← Z2

randomisierender Zuordner
R=map_rand(ID, Z1, Z2)                                    ~136

                    ~144
R ~~~→

Frequenz-/Zeitpunkt-Zuordner
(f,t=map_ft(R))                                          ~138

        ~146                          ~148

Frequenz-                        Zeitinformation f                    information t

Kanalzugriffsmuster

Fig. 6

Frequenzdifferenz-/Zeitpunkt-Zuordner

$(\Delta fi, t = map\_\Delta ft(R))$

138

$\Delta fi_n$

$fi_n$

154

152

150

Verzögerung

$\Delta fi_{n+1}$

Frequenzkanalindex fi

Zeitinformation t

Fig. 7

EP 3 811 705 B1

Fig. 8

Fig. 9

Fig. 10

EP 3 811 705 B1

Fig. 11

Fig. 12

EP 3 811 705 B1

110

Kanalzugriffsmuster

| Aktivitätsrate $A_1$ | Aktivitätsrate $A_2$ | Aktivitätsrate $A_3$ |
|---|---|---|

Bereich 1           Bereich 2           Bereich 3      Zeit

Fig. 13

Fig. 14

EP 3 811 705 B1

Fig. 15

Fig. 16

EP 3 811 705 B1

<u>200</u>

Senden eines Signals, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt, wobei die Information einen Zustand eines Zahlenfolgengenerators zur Erzeugung einer Zahlenfolge beschreibt oder wobei die Information eine Zahl einer Zahlenfolge beschreibt, wobei die Zahlenfolge das Kanalzugriffsmuster bestimmt — 202

Fig. 17

<u>210</u>

Empfangen eines Signals, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt — 212

Ermitteln des Kanalzugriffsmusters basierend auf der Information über das Kanalzugriffsmuster, wobei die Information einen Zustand eines Zahlenfolgengenerators zur Erzeugung einer Zahlenfolge beschreibt oder wobei die Information eine Zahl einer Zahlenfolge beschreibt, wobei die Zahlenfolge das Kanalzugriffsmuster bestimmt — 214

Fig. 18

300

Erzeugen des Kanalzugriffsmusters, wobei das Kanalzugriffsmuster eine für eine Kommunikation eines Kommunikationssystems verwendbare frequenz- und/oder zeitsprungbasierte Belegung des Frequenzbands angibt, wobei das Kanalzugriffsmuster in Abhängigkeit von einem Zustand eines Zahlenfolgengenerators zur Erzeugung einer Zahlenfolge oder einer Zahl einer Zahlenfolge pseudozufällig erzeugt wird

302

Fig. 19

400

Übertragen von Daten zwischen Teilnehmern eines
Kommunikationssystems basierend auf einem Kanalzugriffsmuster
abschnittsweise in unterschiedlichen Kanälen eines Frequenzbands,
unabhängig davon ob diese oder eine Untermenge davon von
anderen Kommunikationssystemen verwendet werden, wobei sich
das Kanalzugriffsmuster von einem anderen Kanalzugriffsmuster,
basierend auf dem zumindest ein anderes Kommunikationssystem
auf das Frequenzband zugreift, unterscheidet

402

Fig. 20

500

Übertragen von Daten zwischen Teilnehmern eines ersten Kommunikationssystems basierend auf einem ersten Kanalzugriffsmuster abschnittsweise in unterschiedlichen Kanälen des Frequenzbands, unabhängig davon ob diese oder eine Untermenge davon von anderen Kommunikationssystemen verwendet werden, und ~502

Übertragen von Daten zwischen Teilnehmern eines zweiten Kommunikationssystems basierend auf einem zweiten Kanalzugriffsmuster abschnittsweise in unterschiedlichen Kanälen des Frequenzbands, unabhängig davon ob diese oder eine Untermenge davon von anderen Kommunikationssystemen verwendet werden, wobei das erste Kanalzugriffsmuster und das zweite Kanalzugriffsmuster unterschiedlich sind ~504

Fig. 21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100034239 A1
- US 20150163814 A1
- US 20090074033 A1
- US 2011305232 A1
- DE 102011082098
- DE 102011082098 B4
- DE 102017206236